(19) Europäisches Patentamt
European Patent Office
Office européen des brevets

(11) **EP 4 745 612 A1**

(12) **EUROPEAN PATENT APPLICATION**
published in accordance with Art. 153(4) EPC

(43) Date of publication:
**20.05.2026 Bulletin 2026/21**

(21) Application number: **24881019.4**

(22) Date of filing: **29.05.2024**

(51) International Patent Classification (IPC):
**G01S 3/14** *(2006.01)*

(52) Cooperative Patent Classification (CPC):
**G01S 3/12; G01S 3/14; G01S 3/48; H04W 4/02; H04W 64/00**

(86) International application number:
**PCT/CN2024/096178**

(87) International publication number:
**WO 2025/086640 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311421264**

(71) Applicant: **Huawei Technologies Co., Ltd.**
**Shenzhen, Guangdong 518129 (CN)**

(72) Inventors:
• **XU, Yaoren**
  **Shenzhen, Guangdong 518129 (CN)**
• **TSAI, Chih Yu**
  **Shenzhen, Guangdong 518129 (CN)**
• **LEE, Chien-Ming**
  **Shenzhen, Guangdong 518129 (CN)**
• **LIN, Ching Yen**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **ANGLE-OF-ARRIVAL MEASUREMENT METHOD, AND ELECTRONIC DEVICE, READABLE STORAGE MEDIUM AND CHIP**

(57) This application provides an angle of arrival measurement method, an electronic device, a readable storage medium, and a chip, and relates to the field of wireless positioning technologies. The method is applied to an electronic device. The electronic device includes a first antenna and a second antenna. Antenna radiation patterns of the first antenna and the second antenna are similar within a first angle range around the electronic device, and are not similar within a second angle range around the electronic device. The method includes: determining a difference between target parameters measured through the first antenna and the second antenna based on a radio signal; determining an angle of arrival range of the radio signal based on the difference, where the angle of arrival range is the first angle range or the second angle range; and measuring an angle of arrival of the radio signal based on the angle of arrival range through the first antenna and the second antenna. The technical solutions provided in embodiments can improve angle of arrival measurement accuracy.

A measurement device determines a difference between target parameters measured through a first antenna and a second antenna based on a radio signal — S1101

The measurement device determines an angle of arrival range of the radio signal based on the difference — S1102

The measurement device determines an angle of arrival of the radio signal through the first antenna and the second antenna based on the angle of arrival range of the radio signal — S1103

FIG. 11

EP 4 745 612 A1

## Description

This application claims priority to Chinese Patent Application No. 202311421264.X, filed with the China National Intellectual Property Administration on October 27, 2023 and entitled "ANGLE OF ARRIVAL MEASUREMENT METHOD, ELECTRONIC DEVICE, READABLE STORAGE MEDIUM, AND CHIP", which is incorporated herein by reference in its entirety.

## TECHNICAL FIELD

This application relates to the field of wireless positioning technologies, and in particular, to an angle of arrival measurement method, an electronic device, a readable storage medium, and a chip.

## BACKGROUND

An electronic device can determine a direction of a signal source of a radio signal relative to the electronic device based on an angle of arrival (angle of arrival, AoA) of the radio signal, to implement device positioning. Currently, the electronic device usually determines the angle of arrival of the radio signal based on a phase difference between radio signals received by different antennas. However, for two radio signals that are symmetrically incident from a front side and a back side of the electronic device respectively, namely, two radio signals whose angles of arrival are respectively $\theta$ and $-\theta$, the two radio signals have a same phase difference. Therefore, when determining the angle of arrival of the radio signal based on the phase difference, the electronic device usually cannot determine whether the radio signal comes from the front side or the back side of the device, resulting in a large error of a measurement result.

## SUMMARY

This application provides an angle of arrival measurement method, an electronic device, a readable storage medium, and a chip, to resolve a problem of a large angle of arrival measurement error in a conventional technology.

To achieve the foregoing objective, this application uses the following technical solutions.

According to a first aspect, an embodiment of this application provides an angle of arrival measurement method. The method is applied to an electronic device. The electronic device includes a first antenna and a second antenna. Antenna radiation patterns of the first antenna and the second antenna are similar within a first angle range around the electronic device, and are not similar within a second angle range around the electronic device. The method includes: determining a difference between target parameters measured through the first antenna and the second antenna based on a radio signal; determining an angle of arrival range of the radio signal based on the difference, where the angle of arrival range is the first angle range or the second angle range; and measuring an angle of arrival of the radio signal based on the angle of arrival range through the first antenna and the second antenna.

In this embodiment, the electronic device first identifies the angle of arrival range of the radio signal based on a pattern difference between the first antenna and the second antenna within different angle ranges and the difference between the target parameters measured by the first antenna and the second antenna, and then perform angle of arrival measurement within the angle of arrival range, to improve angle of arrival measurement accuracy.

In some embodiments, determining the angle of arrival range of the radio signal based on the difference includes: when the difference is less than or equal to a threshold, determining that the angle of arrival range of the radio signal is the first angle range; or when the difference is greater than the threshold, determining that the angle of arrival range of the radio signal is the second angle range.

In some embodiments, the first angle range corresponds to a back side of the electronic device, and the second angle range corresponds to a front side of the electronic device; or the first angle range corresponds to the front side of the electronic device, and the second angle range corresponds to the back side of the electronic device. The front side is a side facing a screen of the electronic device, and the back side is a side facing a rear cover of the electronic device; or the front side is an area facing the top of the screen of the electronic device, and the back side is an area facing the bottom of the screen of the electronic device. According to the method, the electronic device can improve accuracy of measuring angles of arrival from the front side and the back side of the electronic device.

In some embodiments, the target parameter is a distance from a source device to the electronic device, and the source device is configured to transmit the radio signal; or the target parameter is received power of the radio signal. It should be noted that the target parameter is a parameter affected by an antenna radiation pattern.

In some embodiments, determining the difference between the target parameters measured through the first antenna and the second antenna based on the radio signal includes: determining a first measurement result of the target parameter through the first antenna based on the radio signal; determining a second measurement result of the target parameter through the second antenna based on the radio signal; and determining an absolute value of a difference between the first measurement result and the second measurement result as the difference between the target parameters measured through the first antenna and the second antenna.

In this embodiment, a difference between the antenna radiation patterns of the first antenna and the second antenna on a propagation path of the radio signal is reflected based on the difference between the target parameters measured by the first antenna and the second antenna, to determine the angle of arrival range of the radio signal.

In some embodiments, the second antenna is a co-radiator antenna, and the co-radiator antenna includes a differential mode DM antenna and a common mode CM antenna. Correspondingly, determining the difference between the target parameters measured through the first antenna and the second antenna based on the radio signal includes: determining a first difference between target parameters measured through the first antenna and the DM antenna based on the radio signal; determining a second difference between target parameters measured through the second antenna and the CM antenna based on the radio signal; and determining the difference between the target parameters measured through the first antenna and the second antenna based on the first difference and the second difference.

In this embodiment, the electronic device jointly determines the angle of arrival range of the radio signal based on a feature of complementarity between antenna radiation patterns of the DM antenna and the CM antenna, the difference between the target parameters measured by the first antenna and the DM antenna, and the difference between the target parameters measured by the first antenna and the CM antenna, to improve accuracy of the angle of arrival range.

In some embodiments, determining the difference between the target parameters measured by the first antenna and the second antenna based on the first difference and the second difference includes: determining the larger of the first difference and the second difference as the difference between the target parameters measured through the first antenna and the second antenna based on the radio signal; or determining an average value of the first difference and the second difference as the difference between the target parameters measured through the first antenna and the second antenna based on the radio signal.

In some embodiments, the first antenna is a frame antenna, and the second antenna is a patch antenna. An antenna radiator of the frame antenna is a metal frame of a mobile phone, and is easy to be configured as an omnidirectional antenna. An antenna radiator of the patch antenna is a metal patch, and is easy to be configured as a directional antenna. Antenna radiation patterns of the omnidirectional antenna and the directional antenna are easy to satisfy a feature of being similar within the first angle range and being not similar within the second angle range, to assist in implementing the angle of arrival measurement method provided in embodiments.

In some embodiments, measuring the angle of arrival of the radio signal based on the angle of arrival range through the first antenna and the second antenna includes: during rotation of the electronic device, determining, within the angle of arrival range, correlations between measured values of phase differences of the radio signal at a plurality of different moments and ground truth values of phase differences at different angles of arrival; performing fusion processing on the correlations at the plurality of different moments, to obtain fused correlations; and determining the angle of arrival of the radio signal based on the fused correlations.

According to the method provided in this embodiment of this application, the electronic device may further improve angle of arrival measurement accuracy by rotating the mobile phone to assist in angle measurement.

In some embodiments, determining the angle of arrival of the radio signal based on the fused correlations includes: determining a largest value in the fused correlations; and determining an angle of arrival corresponding to the largest value as the angle of arrival of the radio signal.

In some embodiments, a sum of the first angle range and the second angle range covers a range of 360° around the electronic device.

According to a second aspect, an embodiment of this application provides an electronic device. The electronic device includes a first antenna and a second antenna. Antenna radiation patterns of the first antenna and the second antenna are similar within a first angle range around the electronic device, and are not similar within a second angle range around the electronic device. The electronic device is configured to perform the method shown in the first aspect.

According to a third aspect, an embodiment of this application provides a computer-readable storage medium. The computer-readable storage medium stores a computer program. When the computer program is executed by a processor, the method shown in the first aspect is implemented. According to a fourth aspect, an embodiment of this application provides a chip. The chip includes a processor and a memory. The memory stores a computer program. When the computer program is executed by the processor, the method shown in the first aspect is implemented.

According to a fifth aspect, an embodiment of this application provides a computer program product. The computer program product stores a computer program. When the computer program is run by an electronic device, the electronic device is enabled to perform the method shown in the first aspect.

It may be understood that, for beneficial effects of the second aspect to the fifth aspect, refer to related descriptions in the first aspect. Details are not described herein again.

## BRIEF DESCRIPTION OF DRAWINGS

FIG. 1 is a diagram of an angle of arrival measurement system according to an embodiment of this application;

FIG. 2A is a diagram of an angle of arrival measurement posture according to an embodiment of this application;

FIG. 2B is a diagram of a front side and a back side of a measurement device according to an embodiment of this application;

FIG. 3 is a diagram of an angle of arrival measurement posture according to another embodiment of this application;

FIG. 4 is a diagram of an angle of arrival according to an embodiment of this application;

FIG. 5 is a diagram of an angle of arrival measurement principle according to an embodiment of this application;

FIG. 6 is a diagram of a cosine function according to an embodiment of this application;

FIG. 7A is a diagram of a structure of a measurement device to which an angle of arrival measurement method is applicable according to an embodiment of this application;

FIG. 7B is a diagram of a structure of a measurement device to which an angle of arrival measurement method is applicable according to another embodiment of this application;

FIG. 8 is antenna radiation pattern diagrams of a first antenna and a second antenna according to an embodiment of this application;

FIG. 9 is three-dimensional diagrams of antenna radiation patterns of a first antenna and a second antenna according to an embodiment of this application;

FIG. 10 is a diagram of a ranging difference between a first antenna and a second antenna according to an embodiment of this application;

FIG. 11 is a schematic flowchart of an angle of arrival measurement method according to an embodiment of this application;

FIG. 12 is antenna radiation pattern diagrams of a DM antenna and a CM antenna according to an embodiment of this application;

FIG. 13A is a diagram of a ranging difference between a first antenna and a DM/CM antenna according to an embodiment of this application;

FIG. 13B is a diagram of a ranging difference present after fusion processing according to an embodiment of this application;

FIG. 14 is a flowchart of determining an angle of arrival range according to an embodiment of this application;

FIG. 15 is a diagram of a correlation of phase differences according to an embodiment of this application;

FIG. 16 is a diagram of an angle of arrival measurement process according to an embodiment of this application;

FIG. 17 is a diagram of a correlation of a phase difference according to an embodiment of this application;

FIG. 18 is a diagram of an angle of arrival measurement process according to another embodiment of this application;

FIG. 19 is a diagram of a display interface of a measurement device according to an embodiment of this application;

FIG. 20(a) and FIG. 20(b) are a diagram of a correlation of a phase difference according to another embodiment of this application;

FIG. 21 is a schematic flowchart of an angle of arrival measurement method according to another embodiment of this application;

FIG. 22 is a diagram of a display interface of a measurement device according to another embodiment of this application;

FIG. 23(a) to FIG. 23(d) are a diagram of a correlation of a phase difference according to still another embodiment of this application;

FIG. 24 is a diagram of a display interface of a measurement device according to still another embodiment of this application;

FIG. 25 is a diagram of an angle of arrival measurement error according to an embodiment of this application; and

FIG. 26 is a diagram of a structure of a chip according to an embodiment of this application.

## DESCRIPTION OF EMBODIMENTS

It should be understood that, in descriptions of embodiments of this application, "/" indicates "or" unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

The terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features.

In the descriptions of embodiments, unless otherwise specified, "a plurality of" means two or more.

The following describes technical solutions provided in embodiments of this application with reference to accompanying drawings.

An angle of arrival (angle of arrival, AoA) is a key parameter in a wireless positioning technology, and indicates an included angle between a direction of arrival of a radio signal and a straight line on which an angle of arrival measurement antenna (briefly referred to as an antenna below) is located. Based on an angle of arrival measurement technology, an electronic device may position a source device that transmits the radio signal, or perform reverse positioning on the electronic device based on position information of the source device. The angle of arrival measurement technology is widely used in the field of wireless positioning technologies.

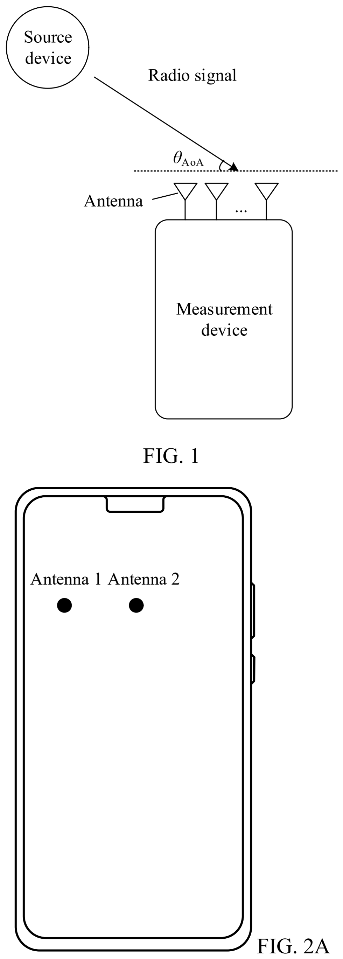

FIG. 1 is a diagram of an angle of arrival measurement system according to an embodiment of this application. With reference to FIG. 1, the angle of arrival measurement system includes a measurement device and a source device, and the measurement device is connected to the source device according to a wireless communication technology.

In this embodiment, electronic devices such as the measurement device and the source device may be a mobile phone (mobile phone), a tablet computer (Pad), a smart home device (for example, a smart television, a smart sound box, a robotic vacuum cleaner, and a smart air conditioner) with a wireless transceiver function, a computer with a wireless transceiver function, a smart television, a projector, a wearable device (for example, a smartwatch), a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), a router, or the like. Specific types of the measurement device and the source device are not limited in embodiments of this application.

In addition, the wireless communication technology may be a wireless fidelity (wireless fidelity, Wi-Fi) communication technology, a conventional Bluetooth (Bluetooth, BT) communication technology, a Bluetooth low energy (Bluetooth low energy, BLE) communication technology, an ultra-wideband (ultra-wideband, UWB) communication technology, or a radio frequency (radio frequency, RF) communication technology. This is not limited in embodiments of this application. **A source device** is configured to transmit, in an angle of arrival measurement process, a radio signal required for the measurement. The radio signal may be a measurement frame, a beacon frame, or the like. Optionally, the source device may autonomously transmit the radio signal, or may transmit the radio signal based on an indication of a measurement device. The radio signal may be a Wi-Fi signal, a Bluetooth signal, a UWB signal, an RF signal, or the like. This is not limited in embodiments of this application.

**A measurement device** is configured to: receive, through at least two antennas, a radio signal transmitted by a source device, and determine an angle of arrival of the radio signal based on a phase difference $\Delta\varphi$ between radio signals received by the at least two antennas. For example, the measurement device may calculate an angle of arrival of the radio signal according to an angle of arrival calculation formula, or may determine the angle of arrival of the radio signal based on a mapping relationship between the phase difference and the angle of arrival. This is not limited in embodiments.

It should be noted that the antenna in embodiments is an antenna for measuring an angle of arrival. It should be understood that, although not shown in this embodiment, in addition to the antenna for measuring the angle of arrival, the measurement device may further include another antenna, for example, an antenna for receiving a satellite positioning signal or an antenna for receiving a cellular signal. In addition, an operating frequency band of the antenna is not limited in embodiments of this application. For example, the operating frequency band of the antenna may be a Wi-Fi frequency band of 2.4 GHz/5 GHz, a Bluetooth frequency band of 2.4 GHz, a UWB frequency band of 3.1 GHz to 10.6 GHz, or a new radio (new radio, NR) frequency band of 5 GHz. In an angle of arrival measurement process, the measurement device usually needs to maintain a preset posture, which is described by using examples below.

FIG. 2A is a diagram of an angle of arrival measurement posture according to an embodiment of this application. With reference to FIG. 2A, in an angle of arrival measurement process, a measurement device keeps basically vertical. In other words, a screen of the measurement device is basically perpendicular to a horizontal plane. Straight lines on which an antenna 1 and an antenna 2 for angle of arrival measurement in the measurement device are located keep basically horizontal. Based on this, the antenna 1 and the antenna 2 may measure both an angle of arrival of a radio signal from a front side of the measurement device and an angle of arrival of a radio signal from a back side of the measurement device.

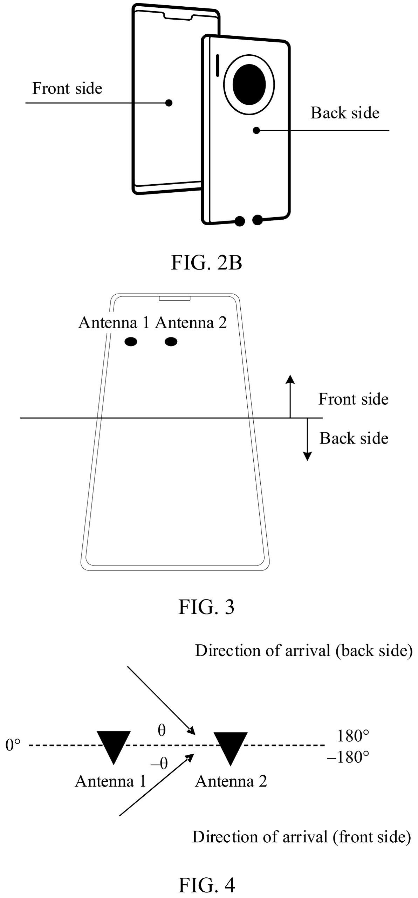

It should be noted that, in the angle of arrival measurement posture, with reference to FIG. 2B, the front side of the measurement device refers to a direction facing a display of the measurement device, and the display displays a picture related to the angle of arrival measurement, for example, information such as an arrow for indicating a direction of arrival or a distance between a source device and the measurement device. The back side of the measurement device refers to a side facing a rear cover (back rear) of the measurement device, and the back side and the front side of the measurement device are provided opposite to each other. It may be understood that, in the angle of arrival measurement process, the front side of the measurement device usually faces a user, and the back side of the measurement device usually faces away from the user.

FIG. 3 is a diagram of an angle of arrival measurement posture according to another embodiment of this application. With reference to FIG. 3, in an angle of arrival measurement process, a measurement device keeps basically horizontal. In other words, a screen of the measurement device is basically parallel to a horizontal plane. In addition, straight lines on which an antenna 1 and an antenna 2 for angle of arrival measurement in the measurement device are located also keep basically horizontal. Based on this, the antenna 1 and the antenna 2 may measure both an angle of arrival of a radio signal from a front side of the measurement device and an angle of arrival of a radio signal from a back side of the measurement device.

It should be noted that, in an angle of arrival measurement posture, with reference to FIG. 3, the front side of the measurement device refers to an area facing the top of the screen of the measurement device, and the back side of the measurement device refers to an area facing the bottom of the screen of the measurement device.

For ease of description, with reference to FIG. 4, in this embodiment, $\theta$ represents the angle of arrival of the radio signal from the back side of the measurement device, and $-\theta$ represents the angle of arrival of the radio signal from the front side of the measurement device. In other words, the angle of arrival of the radio signal from the back side of the measurement device is a positive value, and the angle of arrival of the radio signal from the front side of the radio signal is a negative value. For example, an angle range corresponding to the front side of the measurement device is -180° to 0°, and an angle range corresponding to the back side of the measurement device is 0° to 180°. Certainly, angle ranges corresponding to the front side and the back side of the measurement device may alternatively be other values. This is not limited in embodiments.

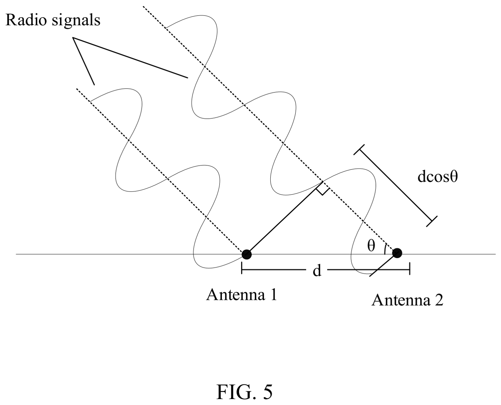

FIG. 5 is a diagram of an angle of arrival measurement principle according to an embodiment of this application. With reference to FIG. 5, an example in which a measurement device measures an angle of arrival of a radio signal through an antenna 1 and an antenna 2 is used. The measurement device may determine the angle of arrival of the radio signal according to Formula (1):

$$\varphi_{ant1} - \varphi_{ant2} = \frac{2\pi d \cos \theta_{\mathrm{AoA}}}{\lambda} \qquad (1)$$

In Formula (1), $\varphi_{ant1}$ is a phase of a radio signal received by the antenna 1, $\varphi_{ant2}$ is a phase of a radio signal received by the antenna 2, and $\varphi_{ant1}$ - $\varphi_{ant2}$ is a phase difference between the radio signal received by the antenna 1 and the radio signal received by the antenna 2. $d$ is a spacing between the antenna 1 and the antenna 2, and $d$ is usually known. $\theta_{\mathrm{AOA}}$ is a to-be-measured angle of arrival. $\lambda$ is a wavelength of the radio signal, and $\lambda$ is usually known.

It may be understood that, in an angle of arrival measurement process, after $\varphi_{ant1}$ and $\varphi_{ant2}$ are measured, the measurement device may obtain the angle of arrival $\theta_{\mathrm{AoA}}$ of the radio signal by substituting $\varphi_{ant1}$ and $\varphi_{ant2}$ into Formula (1).

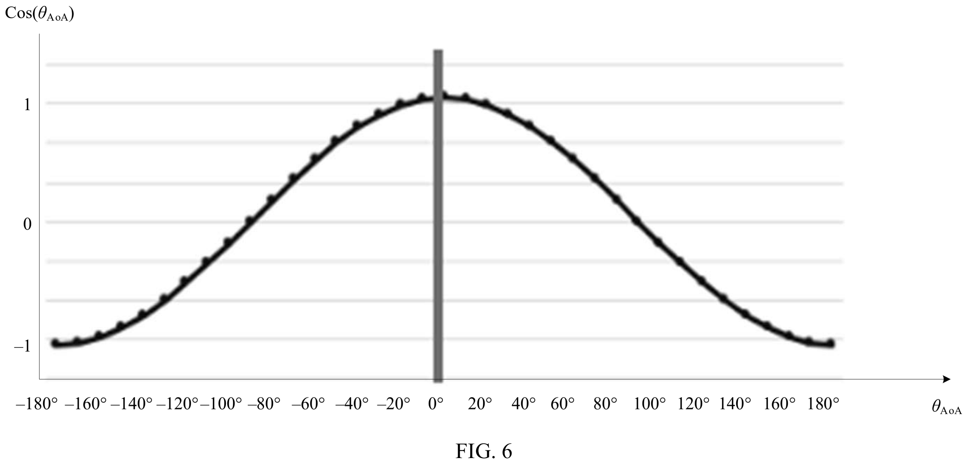

However, it can be learned from a cosine function $f(\theta_{\mathrm{AoA}}) = \cos \theta_{\mathrm{AoA}}$ shown in FIG. 6 that $\cos\theta_{\mathrm{AoA}}$ is symmetric about $\theta_{\mathrm{AoA}} = 0°$ over ranges from -180° to 0° and from 0° to 180°, that is $\cos \theta = \cos(-\theta)$. As a result, an angle of arrival determined by substituting $\varphi_{ant1}$ - $\varphi_{ant2}$ into Formula (1) may be $\theta$ or $-\theta$. In other words, whether the radio signal is incident from the front side of the measurement device or the back side of the measurement device cannot be distinguished according to the foregoing formula, and there may be a large error in a measurement result.

Therefore, an embodiment of this application provides an angle of arrival measurement method. In the method, a direction of a radio signal is distinguished based on a difference between antenna radiation patterns of an antenna on a front side and a back side of a measurement device, to improve angle of arrival measurement accuracy.

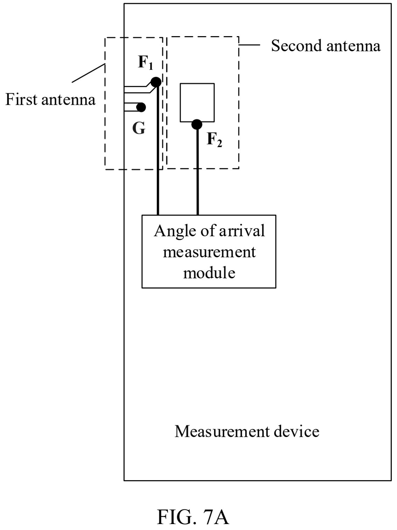

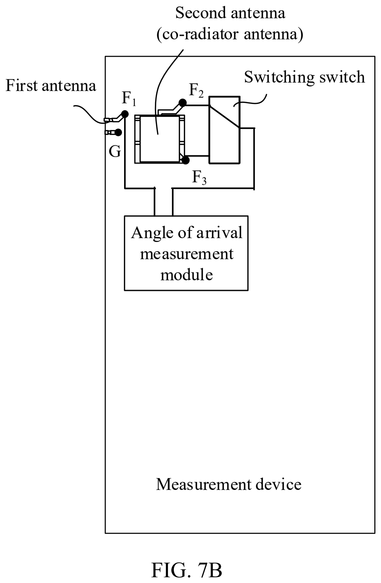

FIG. 7A and FIG. 7B are diagrams of structures of measurement devices to which an angle of arrival measurement method is applicable according to embodiments of this application. As shown in the figure, the measurement device includes an angle of arrival measurement module, a first antenna, and a second antenna.

**The angle of arrival measurement module** is connected to the first antenna and the second antenna, and measures an angle of arrival of a radio signal through the first antenna and the second antenna. For a specific measurement process, refer to the following descriptions. In this embodiment, the angle of arrival measurement module may be a UWB module, a Wi-Fi module, a BT module, an RF module, or the like. This is not limited in embodiments.

**The first antenna** is an omnidirectional antenna, and antenna radiation patterns of the first antenna on a front side and a back side of the measurement device are basically the same. For example, the first antenna may be a frame antenna. A type of the first antenna is not limited in embodiments.

For example, when the first antenna is a frame antenna, with reference to FIG. 7A or FIG. 7B, the first antenna includes an antenna radiator, a ground point G, and a first feed point $F_1$. The antenna radiator is configured to transmit/receive a radio signal, is a part of a metal frame of the measurement device, and is located between two insulated breakpoints on the metal frame. The antenna radiator is connected to the ground point G through a ground line, and the ground point G is connected to a ground plane of a printed circuit board (printed circuit board, PCB) of the measurement device. In addition, the antenna radiator is further connected to the first feed point $F_1$ through a feed line, the first feed point $F_1$ is connected to the angle of arrival measurement module, and a radio frequency source device feeds the antenna radiator through the first feed point $F_1$.

**The second antenna** is a directional antenna, and there is a large difference between antenna radiation patterns of the second antenna on the front side and the back side of the measurement device. For example, the second antenna may be a single patch antenna or a co-radiator patch antenna. A type of the second antenna is not limited in embodiments.

For example, when the second antenna is a single patch antenna, with reference to FIG. 7A, the second antenna includes an antenna radiator and a second feed point $F_2$. The antenna radiator is configured to transmit/receive a radio signal, is of a rectangular metal patch structure, and is disposed on a side that is of a rear cover of the measurement device and that faces a screen of the measurement device. The antenna radiator is connected to the second feed point $F_2$ through a feed line, the second feed point $F_2$ is connected to the angle of arrival measurement module, and the radio frequency source device feeds the antenna radiator through the second feed point $F_2$.

Alternatively, when the second antenna is a co-radiator patch antenna, with reference to FIG. 7B, the second antenna includes an antenna radiator, a second feed point $F_2$, a third feed point $F_3$, and a switching switch. The antenna radiator is a rectangular metal patch, and is disposed on a side that is of a rear cover of the measurement device and that faces a screen of the measurement device. A width of the metal patch is approximately $0.35\lambda$, a length of the metal patch is approximately $0.4\lambda$, and $\lambda$ is a wavelength of a to-be-measured radio signal. A middle position at an end of the antenna radiator is connected to the second feed point $F_2$ through a feed line, to form a differential mode (differential mode, DM) antenna. A maximum current area of the antenna radiator is connected to the third feed point $F_3$, to form a common mode (common mode, CM) antenna. The second feed point $F_2$ and the third feed point $F_3$ are connected to the angle of arrival measurement module via the switching switch.

It may be understood that, in the co-radiator antenna, the angle of arrival measurement module may control, via the switching switch, whether an actually used second antenna is the DM antenna or the CM antenna. In addition, although the DM antenna and the CM antenna share one antenna radiator, isolation between the DM antenna and the CM antenna is greater than a threshold, resulting in small mutual impact between the DM antenna and the CM antenna, so that the DM antenna and the CM antenna can operate normally.

It should be noted that, in the frame antenna, the single patch antenna, and the co-radiator patch antenna, in addition to a conducting wire, lines such as the ground line and the feed line may further include one or more of other electronic elements such as a capacitor, an inductor, and a resistor. Specific structures of the lines are not limited in embodiment.

Although differences between the first antenna and the second antenna in terms of shapes, structures, and the like are shown in the foregoing descriptions, a key difference between the first antenna and the second antenna lies in antenna radiation patterns. The following specifically describes the antenna radiation patterns of the first antenna and the second antenna.

In this embodiment, an antenna radiation pattern (radiation pattern) is used to describe a correspondence between energy radiated by an antenna and each position in space. The antenna radiation pattern is usually of a three-dimensional structure centered on an antenna. It may be understood that, energy radiated by a desirable point source antenna has an equal magnitude and is uniformly attenuated at a same amplitude in all directions. In this case, an antenna radiation pattern of the desirable point source antenna tends to be of a spherical shape. However, during actual application, due to impact of factors such as a shape and a size of an antenna radiator and blockage of an obstacle (for example, a device housing or an element in a device), energy radiated by an antenna may have a same magnitude and a same attenuation amplitude in all directions, or may have different magnitudes and different attenuation amplitudes in all directions. As a result, an antenna radiation pattern during actual application is usually of an irregular shape.

It should be noted that, in this embodiment, antenna radiation patterns of the first antenna and the second antenna need to meet the following pattern state 1 or pattern state 2.

**Pattern state 1:** Antenna radiation patterns of the first antenna and the second antenna on a back side of a measurement device are basically the same, but there is a large difference between antenna radiation patterns of the first antenna and the second antenna on a front side of the measurement device.

**Pattern state 2:** Antenna radiation patterns of the first antenna and the second antenna on a front side of a measurement device are basically the same, but there is a large difference between antenna radiation patterns of the first antenna and the second antenna on a back side of the measurement device.

That the antenna radiation patterns of the first antenna and the second antenna are basically the same may be understood as follows: The antenna radiation patterns of the first antenna and the second antenna are similar. In other words, in most parts of an area (for example, in over 70% or 80% of the area), in a same direction, energy radiated by and an attenuation situation of the first antenna are basically the same as energy radiated by and an attenuation situation of the second antenna, that is, a difference between energy at same positions is less than a threshold.

In addition, that there is a large difference between the antenna radiation patterns of the first antenna and the second antenna may be understood as follows: The antenna radiation patterns of the first antenna and the second antenna are not similar. In other words, in most parts of an area (for example, in over 70% or 80% of the area), in a same direction, there is a large difference between energy radiated by and/or an attenuation situation of the first antenna, and energy radiated by and/or an attenuation situation of the second antenna, that is, a difference between energy at same positions is greater than the threshold.

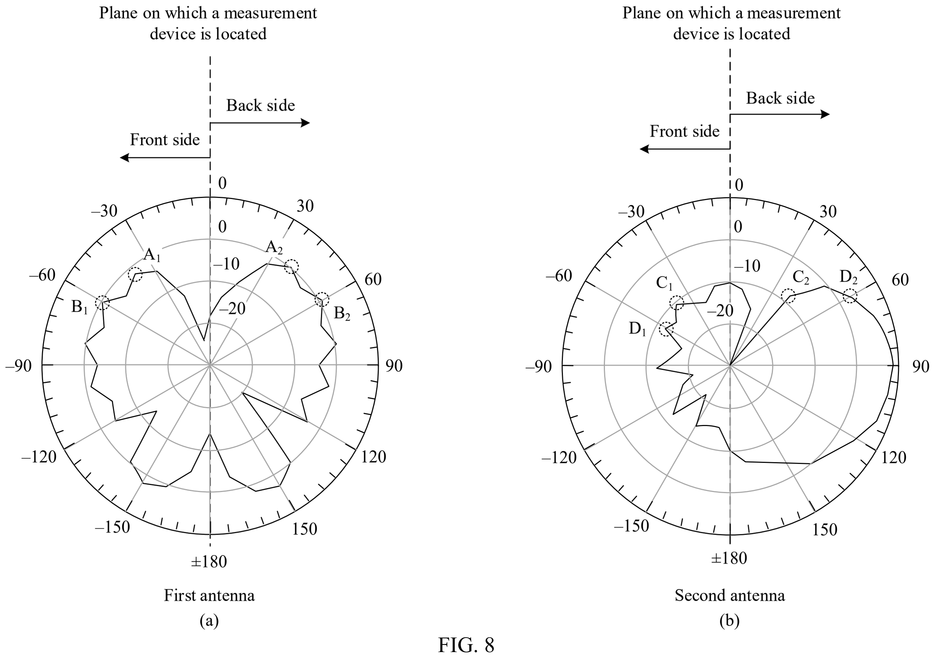

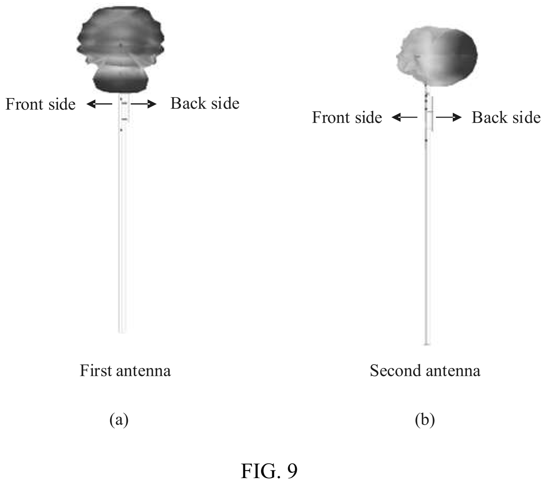

The following uses the pattern state 1 as an example to describe the antenna radiation patterns of the first antenna and the second antenna with reference to FIG. 8 and FIG. 9.

FIG. 8 is antenna radiation pattern diagrams of a first antenna and a second antenna according to an embodiment of this application. The antenna radiation pattern diagram indicates distribution of energy radiated by an antenna at a fixed distance as a function of an angle coordinate. Specifically, in a polar coordinate system shown in FIG. 8, a polar radius represents a magnitude of energy radiated by an antenna, and is in a unit of dBi (decibel gain), a polar angle represents an azimuth relative to a measurement device, where the azimuth ranges from -180° to 180°, and a closed curve in the figure represents energy at different azimuths at a preset distance (for example, 1 m) from the antenna, and shows a change, with the azimuth, in energy radiated by the antenna at the distance. In addition, a direction shown in the figure is used as an example. A left side of a plane on which the measurement device is located is the front side of the measurement device, and a right side of the plane on which the measurement device is located is the back side of the measurement device. With respect to the first antenna, it can be learned from (a) in FIG. 8 that, at a distance of 1 m from the measurement device, antenna radiation patterns of the first antenna on the front side and the back side of the measurement device are basically symmetric about the plane on which the measurement device is located.

$A_1$ and $A_2$ are used as examples. $A_1$ is a point 1 m away from the first antenna in a direction of -40°, $A_2$ is a point 1 m away from the first antenna in a direction of 40°, and $A_1$ and $A_2$ are symmetric about the plane on which the measurement device is located. It can be learned from (a) in FIG. 8 that energy at a position corresponding to $A_1$ is approximately -2 dBi, energy at a position corresponding to $A_2$ is approximately 0 dBi, a difference, namely, 2 dBi, between the energy at the position corresponding to $A_1$ and the energy at the position corresponding to $A_2$ is less than an energy threshold (for example, 3 dBi), and energy at $A_1$ is basically the same as energy at $A_2$.

$B_1$ and $B_2$ are used as examples. $B_1$ is a point 1 m away from the first antenna in a direction of -60°, $B_2$ is a point 1 m away from the first antenna in a direction of 60°, and $B_1$ and $B_2$ are symmetric about the plane on which the measurement device is located. It can be learned from (a) in FIG. 8 that energy at a position corresponding to $B_1$ is approximately 0 dBi, energy at a position corresponding to $B_2$ is also approximately 0 dBi, a difference, namely, 0 dBi, between the energy at the position corresponding to $B_1$ and the energy at the position corresponding to $B_2$ is less than the energy threshold, namely, 3 dBi, and energy at $B_1$ is also basically the same as energy at $B_2$.

With respect to the second antenna, it can be learned from (b) in FIG. 8 that, at a distance of 1 m from the measurement device, there is a large difference between antenna radiation patterns of the second antenna on the front side and the back side of the measurement device. Energy radiated by the second antenna to the front side of the measurement device is weak, and energy radiated by the second antenna to the back side of the measurement device is strong.

$C_1$ and $C_2$ are used as examples. $C_1$ is a point 1 m away from the second antenna in a direction of -40°, $C_2$ is a point 1 m away from the second antenna in a direction of 40°, and $C_1$ and $C_2$ are symmetric about the plane on which the measurement device is located. It can be learned from (b) in FIG. 8 that energy at a position corresponding to $C_1$ is approximately -11 dBi, energy at a position corresponding to $C_2$ is approximately -7 dBi, a difference, namely, 4 dBi, between the energy at the position corresponding to $C_1$ and the energy at the position corresponding to $C_2$ is greater than the energy threshold, namely, 3 dBi, and there is a large difference between energy at $C_1$ and energy at $C_2$.

$D_1$ and $D_2$ are used as examples. $D_1$ is a point 1 m away from the second antenna in a direction of -60°, $D_2$ is a point 1 m away from the second antenna in a direction of 60°, and $D_1$ and $D_2$ are symmetric about the plane on which the measurement device is located. It can be learned from (b) in FIG. 8 that energy at a position corresponding to $D_1$ is approximately -13 dBi, energy at a position corresponding to $C_2$ is approximately 4 dBi, a difference between the energy at the position corresponding to $D_1$ and the energy at the position corresponding to $C_2$ is up to 17 dBi, which is far greater than the energy threshold, namely, 3 dBi, and there is also a large difference between energy at $D_1$ and energy at $D_2$.

In addition, it can be learned by comprehensively comparing (a) in FIG. 8 with (b) in FIG. 8 that, on the back side of the measurement device, the antenna radiation patterns of the first antenna and the second antenna are basically the same, while on the front side of the measurement device, there is a large difference between the antenna radiation patterns of the first antenna and the second antenna.

FIG. 9 is three-dimensional diagrams of antenna radiation patterns of a first antenna and a second antenna according to an embodiment of this application. A deeper color of each pixel in the figure indicates stronger energy at a position corresponding to the pixel. In addition, a direction shown in the figure is used as an example. A left side of a plane on which the measurement device is located is the front side of the measurement device, and a right side of the plane on which the measurement device is located is the back side of the measurement device.

With respect to the first antenna, it can be learned from (a) in FIG. 9 that antenna radiation patterns of the first antenna on the front side and the back side of the measurement device are basically symmetric about the plane on which the measurement device is located. In other words, distribution of energy radiated by the first antenna to the front side of the measurement device is basically the same as that of energy radiated by the first antenna to the back side of the measurement device.

With respect to the second antenna, it can be learned from (b) in FIG. 9 that there is a large difference between antenna radiation patterns of the second antenna on the front side and the back side of the measurement device. Energy radiated by the second antenna to the front side of the measurement device is weak, and energy radiated by the second antenna to the back side of the measurement device is strong.

In addition, it also can be learned by comprehensively comparing (a) in FIG. 9 with (b) in FIG. 9 that, on the back side of the measurement device, the antenna radiation patterns of the first antenna and the second antenna are basically the same, while on the front side of the measurement device, there is a large difference between the antenna radiation patterns of the first antenna and the second antenna.

Generally, larger energy radiated by an antenna to surrounding space indicates a better effect of receiving a radio signal by the antenna. In this case, an antenna radiation pattern affects some parameters related to the radio signal. For example, the parameter may be received power of a radio signal or a distance between a source device that transmits a radio signal and the measurement device. In addition, generally, larger energy radiated by the antenna to the surrounding space indicates a more accurate measurement result of the foregoing parameters such as the power and the distance by the measurement device.

Based on this, it may be understood that, on a radio signal propagation path, when the antenna radiation patterns of the first antenna and the second antenna of the measurement device are more similar, measurement results of the foregoing parameters such as the power and the distance by the first antenna and the second antenna are more similar. When there is a larger difference between the antenna radiation patterns of the first antenna and the second antenna, there is a larger difference between the measurement results of the foregoing parameters such as the power and the distance between the first antenna and the second antenna.

The following uses a distance measurement difference (namely, a ranging difference) between the first antenna and the second antenna in the pattern state 1 as an example to describe impact of a difference between the antenna radiation patterns on some parameters.

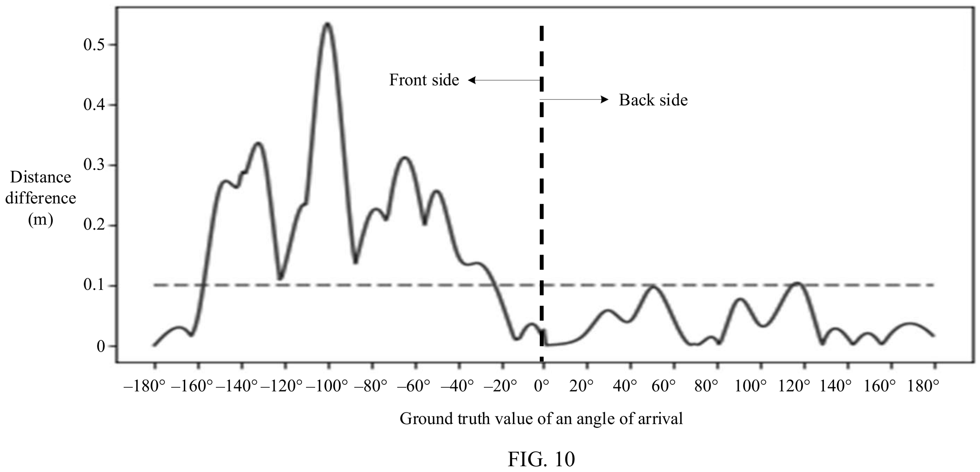

FIG. 10 is a diagram of a ranging difference between a first antenna and a second antenna according to an embodiment of this application. In the figure, a horizontal coordinate represents a ground truth (ground truth) value of an angle of arrival, and a vertical coordinate represents a ranging difference $\Delta D$ between the first antenna and the second antenna in the pattern state 1, where $\Delta D = |D_1 - D_2|$. $D_1$ is a distance, between the source device and the measurement device, that is measured by using the measurement device through the first antenna, and $D_2$ is a distance, between the source device and the measurement device, that is measured by using the measurement device through the second antenna.

It can be learned from FIG. 10 that, because on the front side of the measurement device, there is a large difference between the antenna radiation patterns of the first antenna and the second antenna, the ranging difference $\Delta D$ between the first antenna and the second antenna is large within a range of most of the front side. For example, within an angle of arrival ranging from -170° to - 10°, $\Delta D$ basically ranges from 0.1 m to 0.6 m. Because on the back side of the measurement device, the antenna radiation patterns of the first antenna and the second antenna are basically the same, the ranging difference between the first antenna and the second antenna is small within a range of most of the back side, and is basically less than 0.1 m at each angle of arrival.

Therefore, the measurement device may determine, based on whether the ranging difference $\Delta D$ between the first antenna and the second antenna is greater than a distance threshold (for example, 0.1 m or 0.15 m), whether the radio signal comes from the front side or the back side of the measurement device. For example, an effective identification range of a measurement device that meets a ranging feature shown in FIG. 10 can cover -170° to -10° and 10° to 170°, and a measurement range is large. Therefore, when the ranging difference $\Delta D$ between the first antenna and the second antenna is greater than or equal to the distance threshold, it is determined that the radio signal is from the front side of the measurement device; and when the ranging difference $\Delta D$ between the first antenna and the second antenna is less than the distance threshold, it is determined that the radio signal comes from the back side of the measurement device.

It should be noted that, in a condition in which an antenna radiation pattern in the measurement device meets the pattern state 2, to be specific, in a condition in which the antenna radiation patterns of the first antenna and the second antenna on the back side of the measurement device are basically the same and there is a large difference between the antenna radiation patterns of the first antenna and the second antenna on the front side of the measurement device, when the ranging difference $\Delta D$ between the first antenna and the second antenna is greater than or equal to the distance threshold, it is determined that the radio signal comes from the back side of the measurement device; or when the ranging difference $\Delta D$ between the first antenna and the second antenna is less than the distance threshold, it is determined that the radio signal comes from the front side of the measurement device.

Similarly, because an antenna radiation pattern further affects power W of a measured radio signal, for a same radio signal, power of a radio signal measured through the first antenna is also different from that of a radio signal measured through the second antenna. Therefore, the measurement device may also determine, based on a power difference $\Delta W = |W_1 - W_2|$ between radio signals, an area from which the radio signal comes. $W_1$ is power of the radio signal measured by using the measurement device through the first antenna, and $D_2$ is power of the radio signal measured by using the measurement device through the second antenna.

For example, in a condition in which the measurement device meets the pattern state 1, when the power difference *ΔW* between the first antenna and the second antenna is greater than or equal to a power threshold, it is determined that the radio signal comes from the front side of the measurement device; or when the power difference *ΔW* between the first antenna and the second antenna is less than the power threshold, it is determined that the radio signal comes from the back side of the measurement device.

Alternatively, in a condition in which the measurement device meets the pattern state 2, when the power difference *ΔW* between the first antenna and the second antenna is greater than or equal to the distance threshold, it is determined that the radio signal comes from the back side of the measurement device; or when the power difference *ΔW* between the first antenna and the second antenna is less than the distance threshold, it is determined that the radio signal comes from the front side of the measurement device.

It may be understood that different areas around the measurement device correspond to different angle ranges. For example, the front side of the measurement device corresponds to a first angle range (for example, from -180° to 0°), and the back side of the measurement device corresponds to a second angle range (for example, from 0° to 180°). Alternatively, the back side of the measurement device corresponds to the first angle range, and the front side of the measurement device corresponds to the second angle range. This is not limited in embodiments. Therefore, the measurement device can identify an area from which the radio signal comes. In other words, the measurement device can identify an angle of arrival range of the radio signal. Based on this, in an angle of arrival measurement process, the measurement device can filter an angle of arrival that does not belong to the angle of arrival range, thereby improving angle of arrival measurement accuracy.

The following specifically describes an angle of arrival measurement process provided in embodiments of this application.

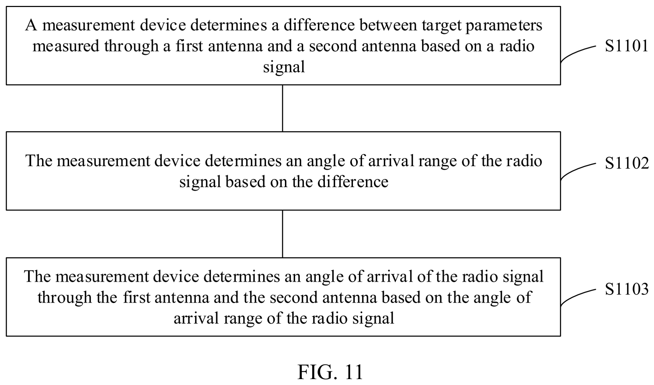

FIG. 11 is a schematic flowchart of an angle of arrival measurement method according to an embodiment of this application. With reference to FIG. 11, the method specifically includes the following steps S1101 to S1103.

S1101: A measurement device determines a difference between target parameters measured through a first antenna and a second antenna based on a radio signal.

In this embodiment, the target parameter is a parameter affected by an antenna radiation pattern, for example, a distance between the measurement device and a source device or power, of a radio signal, received by the measurement device.

For example, in S1101, that the measurement device determines the difference between the target parameters measured through the first antenna and the second antenna based on the radio signal specifically includes: The measurement device determines a first measurement result of the target parameter through the first antenna based on the radio signal. In addition, the measurement device determines a second measurement result of the target parameter through the second antenna based on the radio signal, and determines an absolute value of a difference between the first measurement result and the second measurement result as the difference between the target parameters measured through the first antenna and the second antenna.

S1102: The measurement device determines an angle of arrival range of the radio signal based on the difference.

It can be learned from the foregoing descriptions that, because the target parameter is affected by an antenna radiation pattern on a propagation path, a difference between patterns of the first antenna and the second antenna on a propagation path of the radio signal may be determined based on the difference between the first measurement result and the second measurement result of the target parameter, to determine whether the radio signal comes from a front side or a back side of the measurement device, that is, the angle of arrival range of the radio signal.

For example, when the absolute value of the difference between the first measurement result and the second measurement result is greater than or equal to a threshold, it is determined that the radio signal comes from a first angle range. Within the first angle range, there is a large difference between antenna radiation patterns of the first antenna and the second antenna. It should be noted that, based on different antenna configurations of the measurement device, the first angle range may be the back side of the measurement device, or may be the front side of the measurement device.

Alternatively, when the absolute value of the difference between the first measurement result and the second measurement result is less than the threshold, it is determined that the radio signal comes from a second angle range. The first angle range is different from the second angle range, and within the second angle range, the antenna radiation patterns of the first antenna and the second antenna are basically the same. Similarly, based on different antenna configurations of the measurement device, the second angle range may be the front side of the measurement device, or may be the back side of the measurement device.

S1103: The measurement device determines an angle of arrival of the radio signal through the first antenna and the second antenna based on the angle of arrival range of the radio signal.

It may be understood that, after determining the angle of arrival range, the measurement device may further determine the angle of arrival of the radio signal within the angle of arrival range, thereby improving angle of arrival measurement accuracy.

In conclusion, according to the method provided in this embodiment of this application, based on impact, on a measurement parameter, such as distance or power, of differences of patterns on the back side and the front side between the first antenna and the second antenna, the measurement device identifies, based on a difference between parameters measured through the first antenna and the second antenna, whether the radio signal comes from the front side or the back side, to detect a radio signal within a 360° range, thereby improving the angle of arrival measurement accuracy of the measurement device.

The following uses an example in which the measurement device meets a pattern state 1, to specifically describe content in two aspects in this embodiment of this application: (1) Determine the angle of arrival range of the radio signal; and (2) Determine the angle of arrival of the radio signal based on the angle of arrival range of the radio signal.

**(1) Determine the angle of arrival range of the radio signal**

For antennas in different forms, the measurement device may use different methods to determine the angle of arrival range of the radio signal. The following uses an example in which the measurement device includes the first angle range (for example, from -180° to 0°) and the second angle range (for example, from 0° to 180°), the first angle of arrival range corresponds to the front side of the measurement device, and the second angle range corresponds to the back side of the measurement device, to describe, based on different examples, a process of determining the angle of arrival range of the radio signal.

**Example 1: The first antenna is a single frame antenna, and the second antenna is a single patch antenna.**

With reference to FIG. 7A, the first antenna of the measurement device is a single frame antenna, and a second antenna of the measurement device is a single patch antenna. Generally, the single frame antenna and the single patch antenna each have only one antenna radiation pattern. Therefore, for a determined radio signal, a difference between target parameters measured through the first antenna and the second antenna is determined. The measurement device may determine the angle of arrival range of the radio signal based on the difference and a pattern status that the measurement device meets.

For example, in a case in which the measurement device meets the pattern state 1, when the difference between the target parameters measured through the first antenna and the second antenna is less than the threshold, it indicates that the antenna radiation patterns on the propagation path are basically the same when the radio signal is propagated to the first antenna and the second antenna. In this case, it is determined that the radio signal comes from the back side of the measurement device. In other words, the angle of arrival range of the radio signal is the second angle range from 0 to 180°. When the difference between the target parameters measured through the first antenna and the second antenna is greater than or equal to the threshold, it indicates that there is a large difference between the antenna radiation patterns on the propagation path when the radio signal is propagated to the first antenna and the second antenna. In this case, it is determined that the radio signal comes from the front side of the measurement device. In other words, the angle of arrival range of the radio signal is the first angle range from -180° to 0°.

**Example 2: The first antenna is a single frame antenna, and the second antenna is a co-radiator patch antenna.**

With reference to FIG. 7B, the first antenna of the measurement device is a single frame antenna, and a second antenna of the measurement device is a co-radiator patch antenna. The single frame antenna generally has only one antenna radiation pattern. However, the co-radiator patch antenna actually includes two antennas, the two antennas are a DM antenna and a CM antenna respectively, and antenna radiation patterns of the DM antenna and the CM antenna are different. In other words, the second antenna actually has two different antenna radiation patterns.

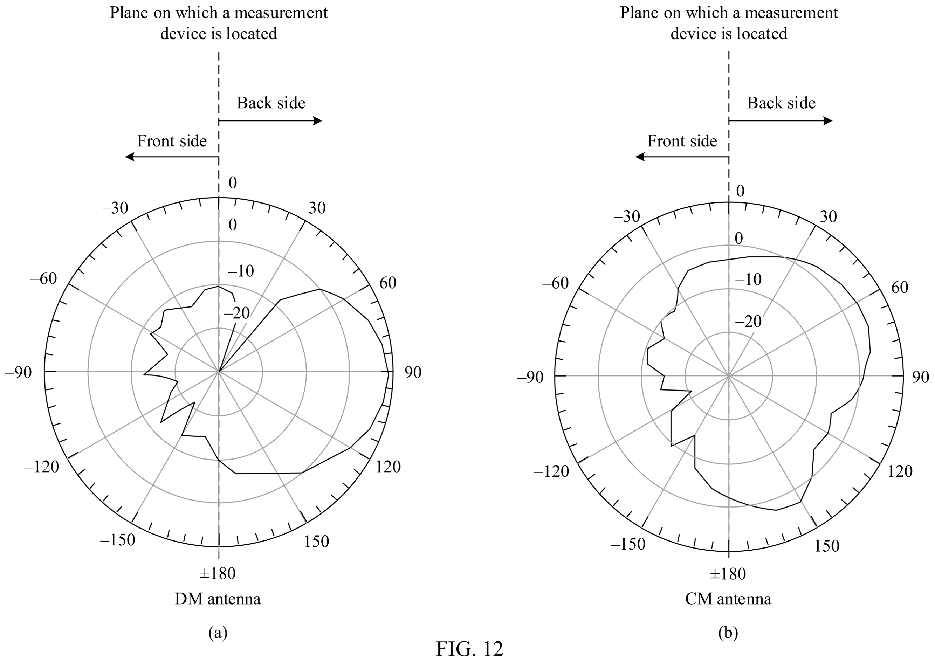

FIG. 12 is antenna radiation pattern diagrams of a DM antenna and a CM antenna according to an embodiment of this application. Refer to FIG. 12. It can be learned that antenna radiation patterns of the DM antenna and the CM antenna on the front side of the measurement device are basically the same, but there is a large difference between antenna radiation patterns of the DM antenna and the CM antenna on the back side of the measurement device. In addition, on the back side of the measurement device, the antenna radiation patterns of the DM antenna and the CM antenna may complement each other. For example, as shown in (a) and (b) in FIG. 12, within ranges from 0° to 40° and from 150° to 180° on the back side of the measurement device, energy radiated by the DM antenna is less than energy radiated by the CM antenna, while within a range from 40° to 150° on the back side of the measurement device, energy radiated by the DM antenna is greater than energy radiated by the CM antenna.

When there is a difference between the antenna radiation patterns of the DM antenna and the CM antenna, there is also a difference between the DM antenna and the CM antenna, and the first antenna in determining the measurement parameter, for example, the distance or the power. Details are described below.

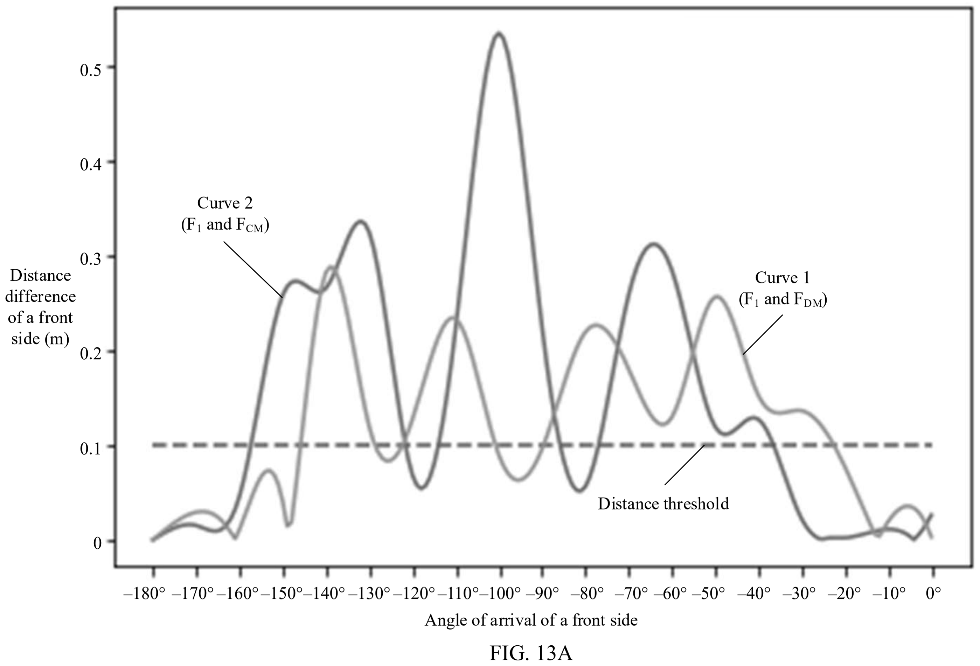

FIG. 13A is a diagram of a ranging difference between a first antenna and a DM/CM antenna according to this embodiment. In the figure, a curve 1 shows the ranging difference between the first antenna and the DM antenna, and a curve 2 shows the ranging difference between the first antenna and the CM antenna. It can be learned from the figure that, within an effective measurement range from -160° to -20°, the ranging difference between the first antenna and the DM antenna is less than the threshold at around -130° to -120° and -100° to -90°, and cannot accurately reflect a pattern difference between the first antenna and the DM antenna, while the ranging difference between the first antenna and the DM antenna is greater than or equal to the distance threshold within remaining angle ranges, and can accurately reflect the pattern difference between the first antenna and the DM antenna. In addition, within the effective measurement range from -160° to -20°, the ranging difference between the first antenna and the CM antenna is less than the threshold at around -120° to -110° and -85° to -75°, and cannot accurately reflect a pattern difference between the first antenna and the CM antenna, while the ranging difference between the first antenna and the CM antenna is greater than or equal to the distance threshold within remaining angle ranges, and can accurately reflect the pattern difference between the first antenna and the CM antenna. It can be learned that an angle range within which the ranging difference of the DM antenna cannot reflect the pattern difference is different from an angle range within which the ranging difference of the CM antenna cannot reflect the pattern difference. In this case, the measurement device may use the DM antenna and the CM antenna in combination to identify the difference between the radiation patterns of the first antenna and the second antenna, to determine the angle of arrival range of the radio signal.

In a possible implementation, for the target parameter, the measurement device may measure a difference through the DM antenna and the first antenna, measure another difference through the CM antenna and the first antenna, and jointly determine the angle of arrival range of the radio signal based on a feature of complementarity between patterns of the DM antenna and the CM antenna and the two differences, thereby improving accuracy of the angle of arrival range.

For example, the target parameter is the distance between the measurement device and the source device. The measurement device may perform fusion processing on the ranging difference $\Delta D_{DM}$ between the first antenna and the DM antenna and the ranging difference $\Delta D_{CM}$ between the first antenna and the CM antenna to obtain $\Delta D$, to accurately reflect the pattern difference between the first antenna and the second antenna based on $\Delta D$.

In this embodiment, performing fusion processing on $\Delta D_{DM}$ and $\Delta D_{CM}$ includes: adding $\Delta D_{DM}$ and $\Delta D_{CM}$ at a same angle of arrival to obtain $\Delta D$ at the angle of arrival, that is, the ranging difference is $\Delta D = \Delta D_{DM} + \Delta D_{CM}$; determining an average value of $\Delta D_{CM}$ and $\Delta D_{DM}$ at a same angle of arrival as $\Delta D$ at the angle of arrival, that is, the ranging difference is $\Delta D = (\Delta D_{DM} + \Delta D_{CM})/2$; or determining the larger of $\Delta D_{DM}$ and $\Delta D_{CM}$ at a same angle of arrival as $\Delta D$ at the angle of arrival, that is, the ranging difference is $\Delta D = {}_{max}(\Delta D_{DM}, \Delta D_{CM})$.

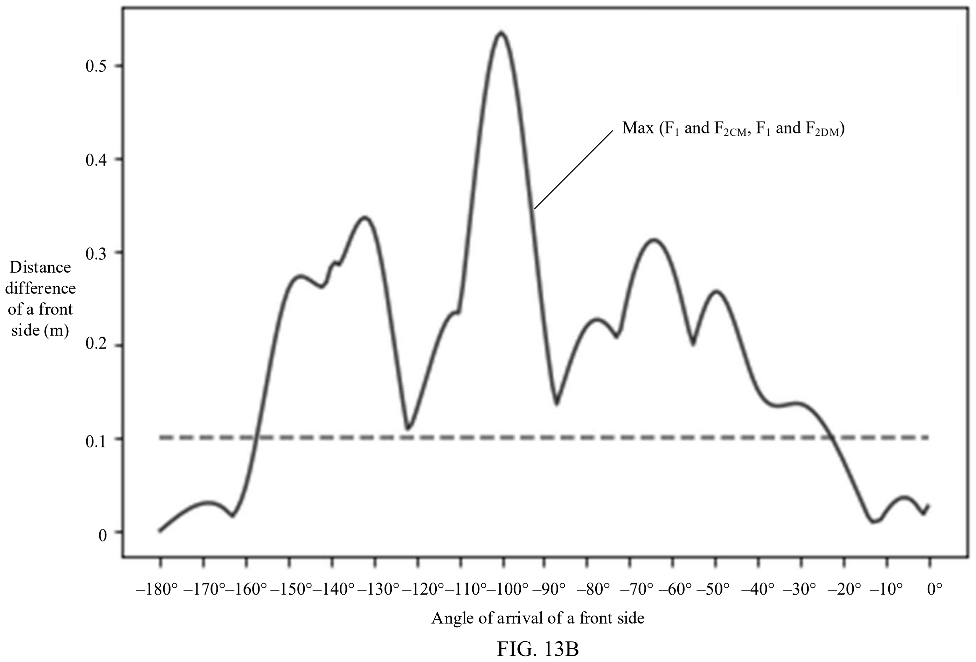

FIG. 13B is a diagram of a ranging difference present after fusion processing according to an embodiment of this application. In the figure, a ranging difference between the first antenna and the second antenna is $\Delta D = {}_{max}(\Delta D_{DM}, \Delta D_{CM})$. It can be learned from the figure that, within the angle of arrival range from -160° to -20°, the ranging difference $\Delta D$ between the first antenna and the second antenna is greater than the distance threshold, and can accurately reflect the pattern difference between the first antenna and the second antenna. This helps accurately determine the angle of arrival range of the radio signal. Therefore, in this embodiment, the measurement device may first determine the ranging difference $\Delta D$ between the first antenna and the second antenna, and then determine the angle of arrival range of the radio signal based on whether the ranging difference $\Delta D$ is greater than the distance threshold.

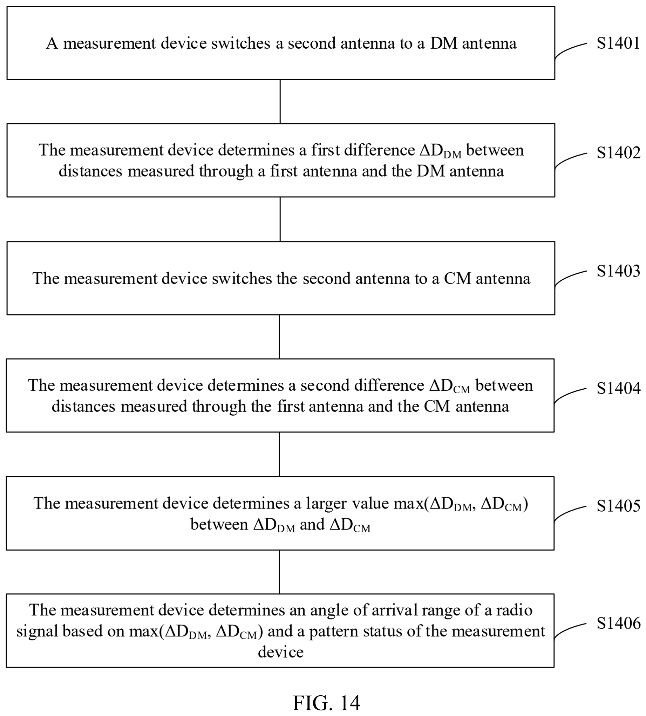

FIG. 14 is a flowchart of determining an angle of arrival range according to an embodiment of this application. Specifically, the following steps S1401 to S1406 are included.

S1401: The measurement device switches the second antenna to the DM antenna.

Specifically, a measurement device shown in FIG. 7B is used as an example. The measurement device may control, through an angle of arrival measurement module, a switching switch to connect to a feed point $F_2$, to switch the second antenna to a DM state, that is, switch the second antenna to the DM antenna.

S1402: The measurement device determines a first difference $\Delta D_{DM}$ between distances measured through the first antenna and the DM antenna.

In this embodiment, the measurement device may measure, through UWB ranging or the like, a distance A between the source device and the measurement device through the first antenna and a distance B between the source device and the measurement device through the CM antenna. It may be understood that a difference between the distance A and the distance B is the first difference $\Delta D_{DM}$.

S1403: The measurement device switches the second antenna to the CM antenna.

Similarly, the measurement device shown in FIG. 7B is used as an example. The measurement device may control, through the angle of arrival measurement module, the switching switch to connect to a feed point $F_3$, to switch the second antenna to a CM state, that is, switch the second antenna to the CM antenna.

S1404: The measurement device determines a second difference $\Delta D_{CM}$ between distances measured through the first antenna and the CM antenna.

Similarly, in this embodiment, the measurement device may also measure, through UWB ranging or the like, a distance C between the source device and the measurement device through the first antenna and a distance D between the source device and the measurement device through the CM antenna. It may be understood that a difference between the distance C and the distance D is the second difference $\Delta D_{CM}$.

S1405: The measurement device determines a larger value $_{max}(\Delta D_{DM}, \Delta D_{CM})$ between $\Delta D_{DM}$ and $\Delta D_{CM}$.

S1406: The measurement device determines the angle of arrival range of the radio signal based on $_{max}(\Delta D_{DM}, \Delta D_{CM})$ and the pattern status of the measurement device.

For example, the first antenna and the second antenna meet the pattern state 1. When $_{max}(\Delta D_{DM}, \Delta D_{CM})$ is less than the distance threshold, it indicates that the antenna radiation patterns on the propagation path are basically the same when the radio signal is propagated to the first antenna and the second antenna, the radio signal comes from the back side of the measurement device, and the angle of arrival range of the radio signal ranges from 0° to 180°. When $_{max}(\Delta D_{DM}, \Delta D_{CM})$ is greater than or equal to the distance threshold, it indicates that there is a large difference between the antenna radiation patterns on the propagation path when the radio signal is propagated to the first antenna and the second antenna, the radio signal comes from the front side of the measurement device, and the angle of arrival range of the radio signal ranges from -180° to 0°.

**(2) Determine the angle of arrival of the radio signal based on the angle of arrival range of the radio signal**

A correspondence between a phase difference $\varphi_{ant1} - \varphi_{ant2}$ between radio signals and a ground truth value of the angle of arrival is usually preset in the measurement device. The correspondence is obtained by a developer through measurement on the measurement device in a measurement environment, for example, a laboratory. It may be understood that, the correspondence is usually fixed for each measurement device. In this case, after detecting a measured value $\varphi_{ant1} - \varphi_{ant2}$ of the phase difference between radio signals received by the first antenna and the second antenna, the measurement device may determine a correlation (correlation) between $\varphi_{ant1} - \varphi_{ant2}$ and ground truth values of phase differences at different angles of arrival, and determine the angle of arrival of the radio signal based on the correlation.

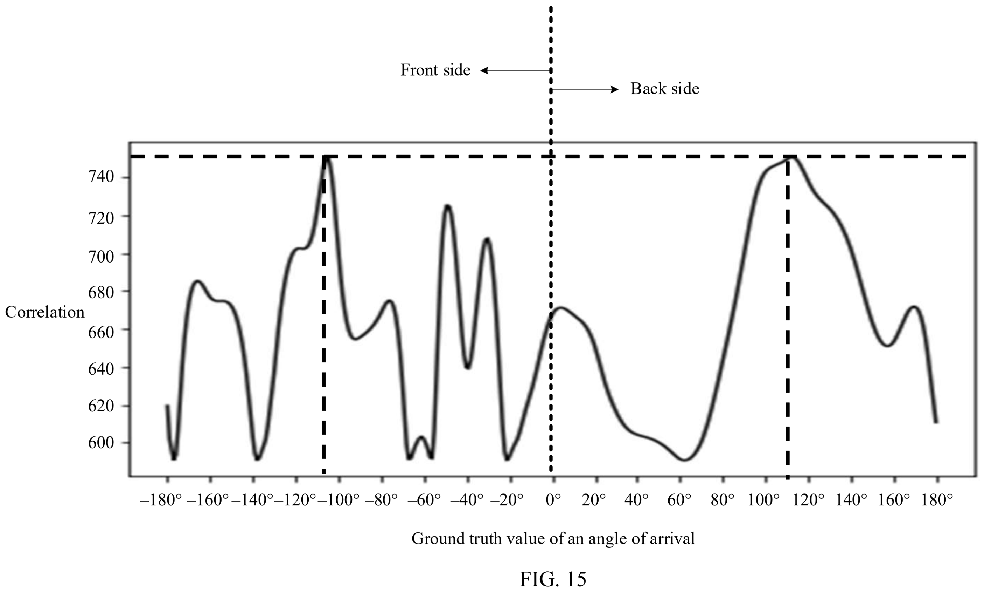

FIG. 15 is a diagram of a correlation of phase differences according to an embodiment of this application. A horizontal coordinate in the figure represents the ground truth value of the angle of arrival, the first angle range from -180° to 0° corresponds the front side of the measurement device, and the second angle range from 0° to 180° is on the back side of the measurement device. A vertical coordinate in the figure represents the correlation between measured values and the ground truth values of the phase differences at different angles of arrival. A larger value of the correlation indicates a higher probability that a corresponding angle of arrival is a real angle of arrival. In this case, the measurement device usually determines angles of arrival corresponding to one or more high correlations as the angle of arrival of the radio signal. However, phase differences of two radio signals whose angles of arrival are θ and -θ are basically the same, and both correlations between the phase difference, and ground truth values of phase differences at θ and - θ may be large, resulting in an inaccurate angle of arrival measurement result. For example, as shown in FIG. 15, both correlations corresponding to angles of arrival -110° and 110° are large. Consequently, both of -110° and 110° may be the angle of arrival of the radio signal, resulting in the inaccurate angle of arrival measurement result.

In this case, in this embodiment, after determining the angle of arrival range of the radio signal, based on a correlation of phase differences at different angles of arrival within the angle of arrival range, the measurement device may determine a measured value of the angle of arrival.

For example, when the angle of arrival range of the radio signal is from -180° to 0°, the measurement device may determine a correlation between a measured value of a phase difference of the radio signal and ground truth values of phase differences at different angles of arrival within

- 180° to 0°, and determine the angle of arrival of the radio signal based on the correlation. The correlation shown in FIG. 15 is used as an example. Based on a maximum correlation in FIG. 15, the measurement device may determine that the angle of arrival of the radio signal is -110° within

- 180° to 0°, thereby improving accuracy of measuring the angle of arrival by the measurement device.

When determining the angle of arrival of the radio signal based on the angle of arrival range of the radio signal, the measurement device may first determine the angle of arrival range of the radio signal, and then perform angle of arrival measurement within the angle of arrival range; or may first perform angle of arrival measurement and determine a plurality of candidate angles of arrival, and then determine the angle of arrival range of the radio signal and perform filtering on the candidate angles of arrival based on the angle of arrival range, to determine a final angle of arrival. For details, refer to the following example 1 and example 2.

**Example 1: The measurement device first determines the angle of arrival range of the radio signal, and then performs angle of arrival measurement within the angle of arrival range.**

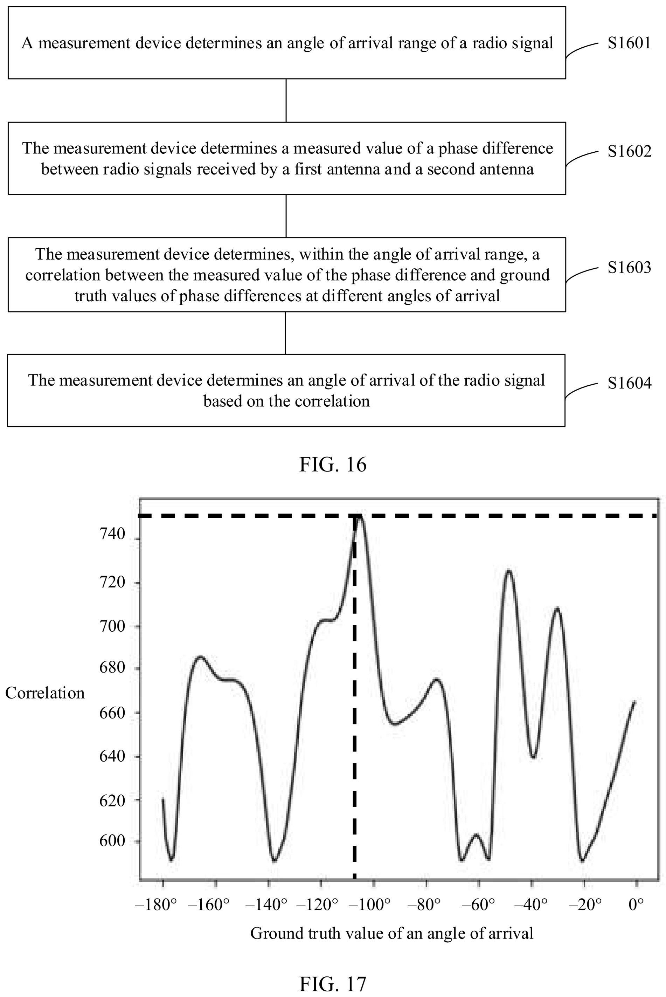

FIG. 16 is a diagram of an angle of arrival measurement process according to an embodiment of this application. Specifically, the following steps S1601 to S1604 are included.

S1601: The measurement device determines the angle of arrival range of the radio signal. For details, refer to the foregoing descriptions. Details are not described herein again.

S1602: The measurement device determines the measured value of the phase difference between the radio signals received by the first antenna and the second antenna.

S1603: The measurement device determines, within the angle of arrival range, a correlation between the measured value of the phase difference and ground truth values of phase differences at different angles of arrival.

For example, when the radio signal comes from the front side of the measurement device, and the angle of arrival range of the radio signal is from -180° to 0°, a correlation between a measured value $\varphi_{ant1}$ - $\varphi_{ant2}$ of the phase difference and a ground truth value of each phase difference of the radio signal within the range from -180° to 0° is shown in FIG. 17.

It should be noted that, in this embodiment, the measurement device does not need a correlation between a measured value and a ground truth value of a phase difference within the range from 0° to 180°, so that an operation amount of the measurement device can be reduced, and an angle of arrival measurement rate can be improved.

S1604: The measurement device determines the angle of arrival of the radio signal based on the correlation.

In some embodiments, the measurement device may determine an angle of arrival with a highest correlation of a phase difference as the angle of arrival of the radio signal. A diagram of the correlation shown in FIG. 17 is used as an example. It can be learned from the figure that a correlation of a phase difference at an angle of arrival -110° is the highest. Therefore, -110° is determined as the angle of arrival of the radio signal.

**Example 2: The measurement device first determines the plurality of candidate angles of arrival, and then performs filtering on the candidate angles of arrival based on the angle of arrival range of the radio signal, to determine the final angle of arrival.**

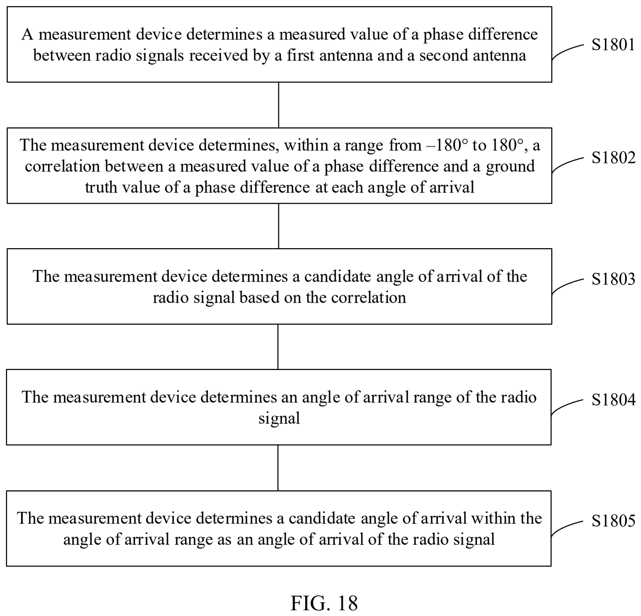

FIG. 18 is a diagram of an angle of arrival measurement process according to another embodiment of this application. Specifically, the following steps S1801 to S1805 are included.

S1801: The measurement device determines the measured value of the phase difference between the radio signals received by the first antenna and the second antenna.

It should be noted that, when the second antenna is a co-radiator antenna, the measured value of the phase difference may be a measured value of a phase difference between the first antenna and the DM antenna, or may be a measured value of a phase difference between the first antenna and the CM antenna.

S1802: The measurement device determines, within a range from -180° to 180°, a correlation between a measured value of a phase difference and a ground truth value of a phase difference at each angle of arrival.

In an embodiment, the correlation between the measured value of the phase difference and the ground truth value of each phase difference of the radio signal within the range from -180° to 180° is shown in FIG. 15.

S1803: The measurement device determines the candidate angle of arrival of the radio signal based on the correlation.

The diagram of the correlation shown in FIG. 15 is used as an example. The measurement device may determine a plurality of angles of arrival, for example, -110° and 110°, with a high correlation as the candidate angles of arrival of the radio signal.

S1804: The measurement device determines the angle of arrival range of the radio signal. For details, refer to the foregoing descriptions. Details are not described herein again.

S1805: The measurement device determines a candidate angle of arrival within the angle of arrival range as the angle of arrival of the radio signal.

For example, the angle of arrival range of the radio signal is from -180° to 0°, and the candidate angles of arrival include -110° and 110°. The measurement device may determine -110° that is within the angle of arrival range from -180° to 0° as the angle of arrival of the radio signal.

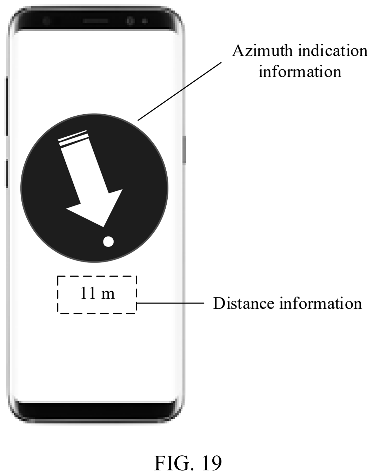

In this embodiment, after determining that the angle of arrival of the radio signal is -110°, the measurement device may display direction indication information shown in FIG. 19, to inform a user of an incoming direction of the radio signal. It may be understood that the incoming direction of the radio signal is also a direction of the source device relative to the measurement device. In addition, the measurement device may further measure information about the distance between the device and the source device of the radio signal, for example, a distance of 11 m.

In conclusion, according to the angle of arrival measurement method provided in this embodiment, after determining the angle of arrival range of the radio signal, the measurement device may further determine the angle of arrival of the radio signal within the angle of arrival range, thereby improving angle of arrival measurement accuracy.

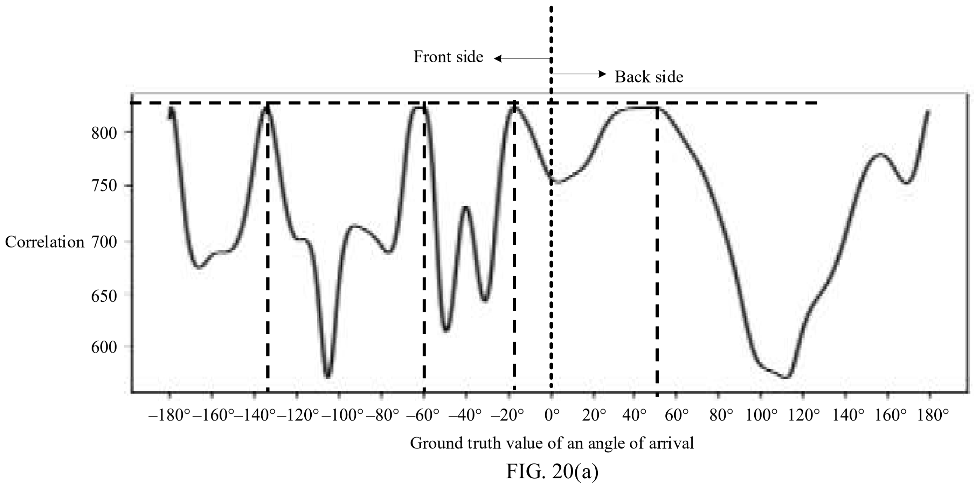

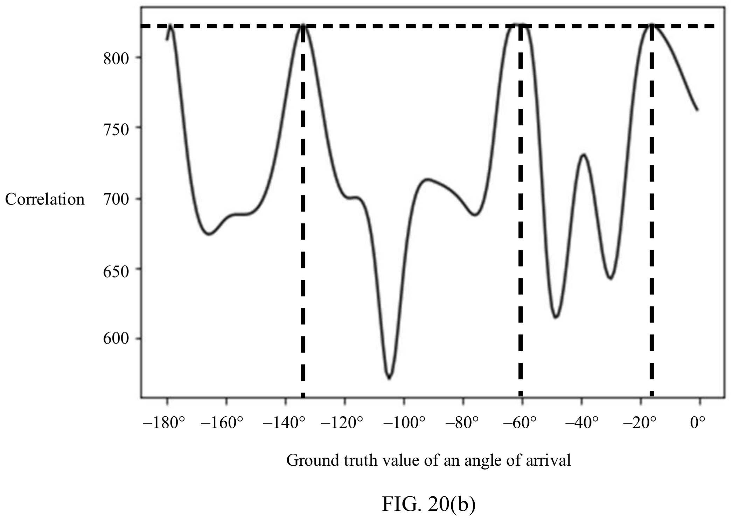

However, in some special cases, for example, as shown in FIG. 20(a), when the radio signal is at a plurality of angles of arrival such as -178°, -135°, -60°, -18°, and 50°, all measured values of phase differences have high correlations with ground truth values. Based on this, with reference to FIG. 20(b), even if the measurement device identifies, according to the foregoing method, that the radio signal is from the back side, and narrows a possible angle of arrival range to from -180° to 0°, the measurement device can exclude only 50°, but cannot accurately determine the angle of arrival in -178°, -135°, -60°, and -18°.

In this case, to further improve accuracy of the angle of arrival measurement result, the measurement device may further determine the angle of arrival through a rotation operation on the measurement device. The following describes, in combination with the measurement device shown in FIG. 7A, the angle of arrival measurement method by using an example. It should be understood that the angle of arrival measurement method provided in this embodiment may also be applied to, for example, a measurement device including a co-radiator antenna shown in FIG. 7B.

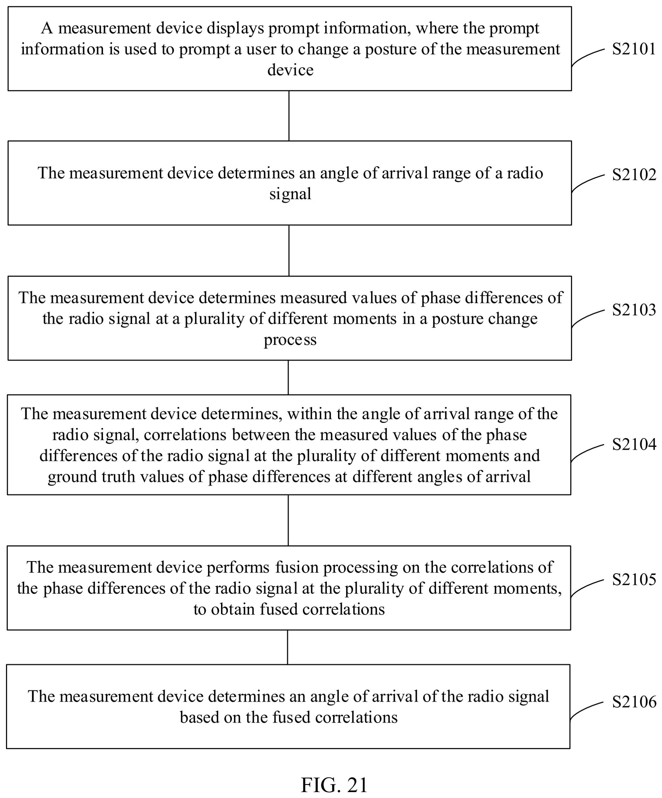

FIG. 21 is a schematic flowchart of an angle of arrival measurement method according to another embodiment of this application. With reference to FIG. 21, the method includes the following steps S2101 to S2106.

S2101: A measurement device displays prompt information, where the prompt information is used to prompt a user to change a posture of the measurement device.

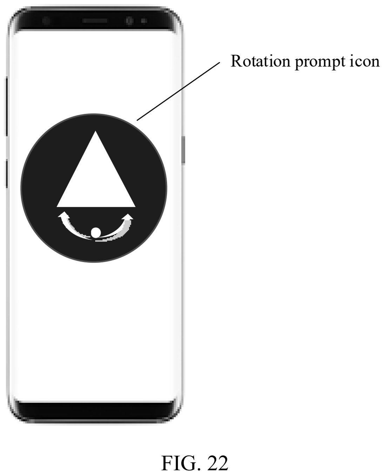

In some embodiments, the measurement device may display a rotation prompt icon shown in FIG. 22, to prompt the user to rotate a mobile phone leftward or rightward. Alternatively, the measurement device may display prompt text such as "keep the mobile phone vertical, and slowly rotate the mobile phone leftward or rightward", to prompt the user to rotate the mobile phone leftward or rightward.

S2102: The measurement device determines an angle of arrival range of a radio signal. For details, refer to the foregoing descriptions. Details are not described herein again.

It should be noted that an execution sequence of S2101 and S2102 is not limited in this embodiment. In other words, the measurement device may first perform S2101 and then perform S2102, or may first perform S2102 and then perform S2101.

S2103: The measurement device determines measured values of phase differences of the radio signal at a plurality of different moments in a posture change process.

For example, the measurement device may respectively determine phase differences of the radio signal at moments T1, T2, and T3.

S2104: The measurement device determines, within the angle of arrival range of the radio signal, correlations between the measured values of the phase differences of the radio signal at the plurality of different moments and ground truth values of phase differences at different angles of arrival.

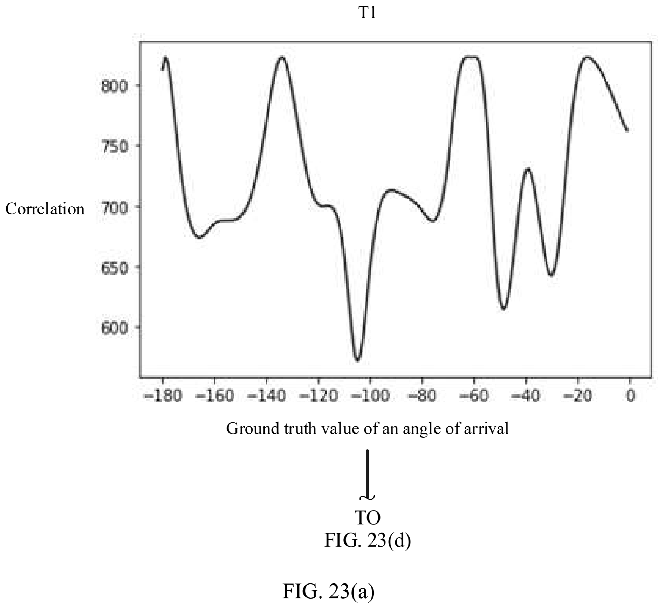

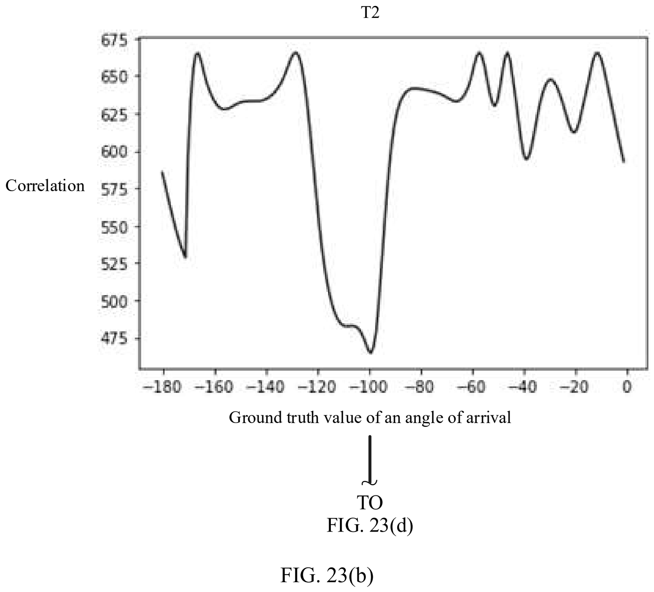

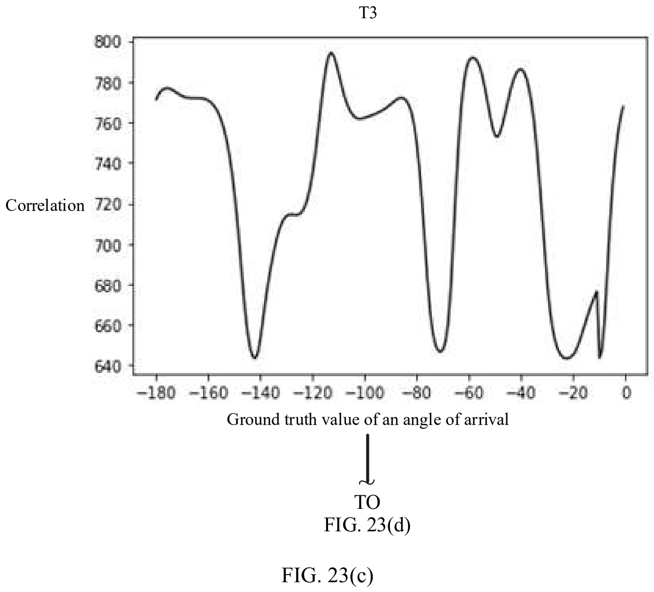

For example, the angle of arrival range of the radio signal is from -180° to 0°. Correlations between measured values and ground truth values of phase differences at the moments T1, T2, and T3 are respectively shown in FIG. 23(a), FIG. 23(b), and FIG. 23(c). It can be learned from the figure that there are a plurality of points with high phase difference correlations at each of the moments T1, T2, and T3. Consequently, the measurement device usually cannot accurately identify an angle of arrival of the radio signal based on the correlation at each moment.

In view of this, in this embodiment, fusion processing is performed on the correlations between the measured values of the phase differences of the radio signal at the plurality of different moments and ground truth values, and the angle of arrival of the radio signal is determined based on a fused phase difference. For details, refer to S2105 and S2106.

S2105: The measurement device performs fusion processing on the correlations of the phase differences of the radio signal at the plurality of different moments, to obtain fused correlations.

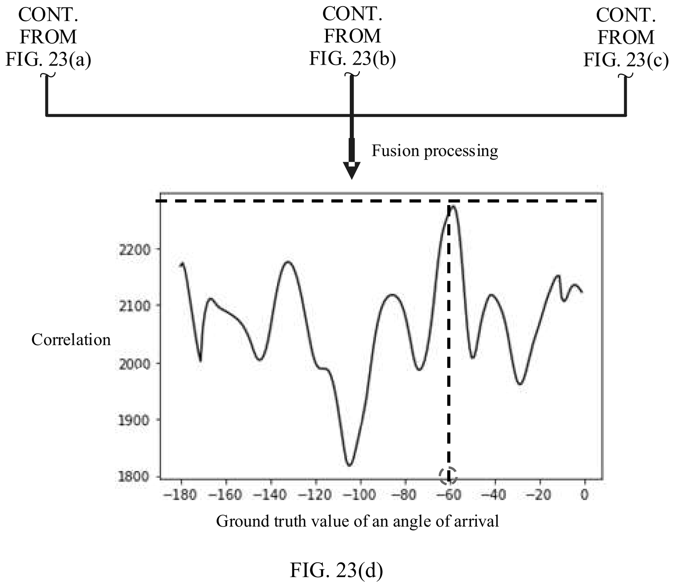

In this embodiment, that the measurement device performs fusion processing on the correlations at the plurality of different moments includes: The measurement device adds correlations corresponding to a same angle of arrival at the plurality of different moments, to obtain the fused correlations. For example, correlations corresponding to a same angle of arrival at the moments T1, T2, and T3 are added to obtain a correlation shown in FIG. 23(d).

It should be noted that a fusion processing manner is not limited in this embodiment. For example, the measurement device may alternatively determine average values of the correlations of the same angle of arrival at the plurality of different moments, and use the average values as the fused correlations.

S2106: The measurement device determines the angle of arrival of the radio signal based on the fused correlations.

For example, the measurement device may determine an angle of arrival corresponding to a maximum correlation as the angle of arrival of the radio signal. A diagram of correlation shown in FIG. 23(d) is used as an example. The measurement device may determine an angle of arrival, that is, -60°, corresponding to a maximum correlation as the angle of arrival of the radio signal.

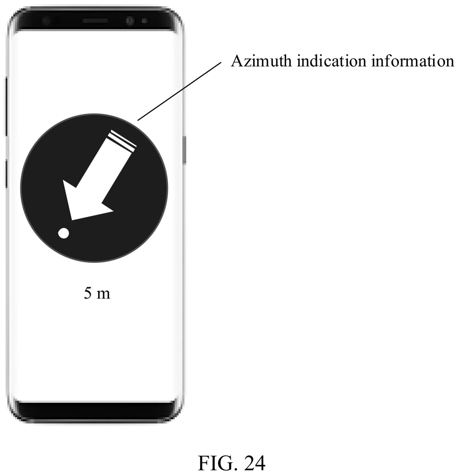

In addition, in this embodiment, after determining that the angle of arrival of the radio signal is - 60°, the measurement device may display direction indication information shown in FIG. 24, to inform the user of the incoming direction of the radio signal. In addition, the measurement device may further measure a distance between the device and a source device of the radio signal, for example, the distance is 5 m.

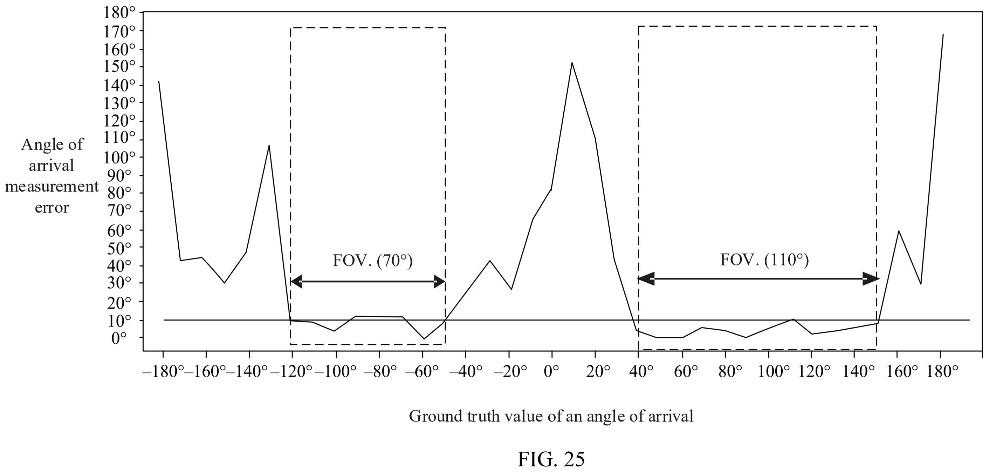

FIG. 25 is a diagram of an angle of arrival measurement error according to an embodiment of this application. In the figure, a horizontal coordinate represents a ground truth value of the angle of arrival, and a vertical coordinate represents an angle of arrival measurement error. The measurement error is a difference between the ground truth value of the angle of arrival and the measured value. It can be learned that, within field of view (field of view, FOV) ranges from - 120° to -50° and from 40° to 150°, an absolute value of an average angle of arrival measurement error is less than 10°. In other words, according to the method provided in this embodiment, the angle of arrival measurement result is accurate.

In conclusion, according to the method provided in this embodiment of this application, the measurement device may improve angle of arrival measurement accuracy by rotating a mobile phone to assist in angle measurement.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Based on a same concept, as implementation of the foregoing method, embodiments of this application provide the following technical solutions. Embodiments of these technical solutions correspond to the foregoing method embodiments. For ease of reading, details in the foregoing method embodiments are not described herein again. However, it should be noted that all the solutions in embodiments can correspondingly implement all content in the foregoing method embodiments.

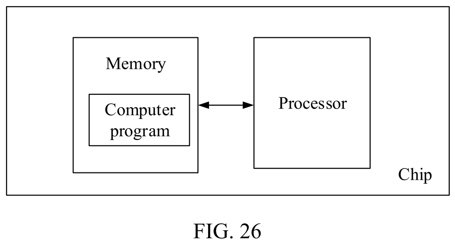

An embodiment of this application further provides a chip. As shown in FIG. 26, the chip includes a processor and a memory. The memory stores a computer program. When the computer program is executed by the processor, the angle of arrival measurement method provided in the foregoing embodiments is implemented.

An embodiment of this application further provides a computer-readable storage medium. The computer-readable storage medium stores a computer program. When the computer program is executed by a processor, the angle of arrival measurement method shown in the foregoing embodiments is implemented.

An embodiment of this application further provides a computer program product. The program product includes a computer program. When the computer program is run by an electronic device, the electronic device is enabled to implement the angle of arrival measurement method shown in the foregoing embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), ans is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

In embodiments provided in this application, division into frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, each of the modules may exist alone physically, or two or more modules may be integrated into one module. The integrated module may be implemented in a form of hardware, or may be implemented in a form of software functional module.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

Reference to "an embodiment" or "some embodiments" described in this specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may still be made to a part of the technical solutions thereof, without departing from the spirit and scope of the technical solutions in embodiments of this application, and these modifications and replacements shall fall within the protection scope of this application.

**Claims**

1. An angle of arrival measurement method, applied to an electronic device, wherein the electronic device comprises a first antenna and a second antenna, and antenna radiation patterns of the first antenna and the second antenna are similar within a first angle range around the electronic device, and are not similar within a second angle range around the electronic device; and the method comprises:

   determining a difference between target parameters measured through the first antenna and the second antenna based on a radio signal;
   determining an angle of arrival range of the radio signal based on the difference, wherein the angle of arrival range is the first angle range or the second angle range; and
   measuring an angle of arrival of the radio signal through the first antenna and the second antenna based on the angle of arrival range.

2. The method according to claim 1, wherein determining the angle of arrival range of the radio signal based on the difference comprises:

   when the difference is less than or equal to a threshold, determining that the angle of arrival range of the radio signal is the first angle range; or
   when the difference is greater than the threshold, determining that the angle of arrival range of the radio signal is the second angle range.

3. The method according to claim 1 or 2, wherein

   the first angle range corresponds to a back side of the electronic device, and the second angle range corresponds to a front side of the electronic device; or
   the first angle range corresponds to the front side of the electronic device, and the second angle range corresponds to the back side of the electronic device, wherein
   the front side is a side facing a screen of the electronic device, and the back side is a side facing a rear cover of the electronic device; or the front side is an area facing the top of the screen of the electronic device, and the back side is an area facing the bottom of the screen of the electronic device.

4. The method according to any one of claims 1 to 3, wherein

   the target parameter is a distance from a source device to the electronic device, and the source device is configured to transmit the radio signal; or
   the target parameter is received power of the radio signal.

5. The method according to any one of claims 1 to 4, wherein determining the difference between the target parameters measured through the first antenna and the second antenna based on the radio signal comprises:

   determining a first measurement result of the target parameter through the first antenna based on the radio signal;
   determining a second measurement result of the target parameter through the second antenna based on the radio signal; and
   determining an absolute value of a difference between the first measurement result and the second measurement result as the difference between the target parameters measured through the first antenna and the second antenna.

6. The method according to any one of claims 1 to 5, wherein the second antenna is a co-radiator antenna, and the co-radiator antenna comprises a differential mode DM antenna and a common mode CM antenna; and correspondingly, determining the difference between the target parameters measured through the first antenna and the second antenna based on the radio signal comprises:

   determining a first difference between target parameters measured through the first antenna and the DM antenna based on the radio signal;

determining a second difference between target parameters measured through the second antenna and the CM antenna based on the radio signal; and
determining the difference between the target parameters measured through the first antenna and the second antenna based on the first difference and the second difference.

7. The method according to claim 6, wherein determining the difference between the target parameters measured through the first antenna and the second antenna based on the first difference and the second difference comprises:

determining the larger of the first difference and the second difference as the difference between the target parameters measured through the first antenna and the second antenna based on the radio signal; or
determining an average value of the first difference and the second difference as the difference between the target parameters measured through the first antenna and the second antenna based on the radio signal.

8. The method according to any one of claims 1 to 7, wherein the first antenna is a frame antenna, and the second antenna is a patch antenna.

9. The method according to any one of claims 1 to 8, wherein measuring the angle of arrival of the radio signal based on the angle of arrival range through the first antenna and the second antenna comprises:

during rotation of the electronic device, determining, within the angle of arrival range, correlations between measured values of phase differences of the radio signal at a plurality of different moments and ground truth values of phase differences at different angles of arrival;
performing fusion processing on the correlations at the plurality of different moments, to obtain fused correlations; and
determining the angle of arrival of the radio signal based on the fused correlations.

10. The method according to claim 9, wherein determining the angle of arrival of the radio signal based on the fused correlations comprises:

determining a largest value in the fused correlations; and
determining an angle of arrival corresponding to the largest value as the angle of arrival of the radio signal.

11. The method according to any one of claims 1 to 10, wherein a sum of the first angle range and the second angle range covers a range of 360° around the electronic device.

12. An electronic device, comprising a first antenna and a second antenna, wherein antenna radiation patterns of the first antenna and the second antenna are similar within a first angle range around the electronic device, and are not similar within a second angle range around the electronic device, and the electronic device is configured to perform the method according to any one of claims 1 to 11.

13. A computer-readable storage medium, wherein the computer-readable storage medium stores a computer program, and when the computer program is executed by a processor, the method according to any one of claims 1 to 11 is implemented.

14. A chip, comprising a processor and a memory, wherein the memory stores a computer program, and when the computer program is executed by the processor, the method according to any one of claims 1 to 11 is implemented.

Source
device

Radio signal

$\theta_{AoA}$

Antenna

...

Measurement
device

FIG. 1

Antenna 1  Antenna 2

●          ●

FIG. 2A

FIG. 2B

Front side

Back side

Antenna 1 Antenna 2

Front side

Back side

FIG. 3

Direction of arrival (back side)

θ

0° ............................................. 180°
−180°

−θ

Antenna 1          Antenna 2

Direction of arrival (front side)

FIG. 4

FIG. 5

FIG. 6

FIG. 7A

FIG. 7B

Plane on which a measurement
device is located

Back side

Front side

−30    0    30

−60    0    60

A₁    A₂

B₁    −10    B₂

−90    −20    90

−120    120

−150    150

±180

First antenna

(a)

Plane on which a measurement
device is located

Back side

Front side

−30    0    30

−60    −10    C₂    D₂    60

C₁

D₁    −20

−90    90

−120    120

−150    150

±180

Second antenna

(b)

FIG. 8

Front side ← → Back side

First antenna

(a)

Front side ← → Back side

Second antenna

(b)

FIG. 9

FIG. 10

A measurement device determines a difference between target parameters measured through a first antenna and a second antenna based on a radio signal — S1101

The measurement device determines an angle of arrival range of the radio signal based on the difference — S1102

The measurement device determines an angle of arrival of the radio signal through the first antenna and the second antenna based on the angle of arrival range of the radio signal — S1103

FIG. 11

EP 4 745 612 A1

Plane on which a measurement device is located

Back side

Front side

DM antenna

(a)

Plane on which a measurement device is located

Back side

Front side

CM antenna

(b)

FIG. 12

FIG. 13A

Max ($F_1$ and $F_{2CM}$, $F_1$ and $F_{2DM}$)

FIG. 13B

EP 4 745 612 A1

A measurement device switches a second antenna to a DM antenna — S1401

The measurement device determines a first difference $\Delta D_{DM}$ between distances measured through a first antenna and the DM antenna — S1402

The measurement device switches the second antenna to a CM antenna — S1403

The measurement device determines a second difference $\Delta D_{CM}$ between distances measured through the first antenna and the CM antenna — S1404

The measurement device determines a larger value $\max(\Delta D_{DM}, \Delta D_{CM})$ between $\Delta D_{DM}$ and $\Delta D_{CM}$ — S1405

The measurement device determines an angle of arrival range of a radio signal based on $\max(\Delta D_{DM}, \Delta D_{CM})$ and a pattern status of the measurement device — S1406

FIG. 14

FIG. 15

A measurement device determines an angle of arrival range of a radio signal — S1601

The measurement device determines a measured value of a phase difference between radio signals received by a first antenna and a second antenna — S1602

The measurement device determines, within the angle of arrival range, a correlation between the measured value of the phase difference and ground truth values of phase differences at different angles of arrival — S1603

The measurement device determines an angle of arrival of the radio signal based on the correlation — S1604

FIG. 16

FIG. 17

A measurement device determines a measured value of a phase difference between radio signals received by a first antenna and a second antenna — S1801

The measurement device determines, within a range from –180° to 180°, a correlation between a measured value of a phase difference and a ground truth value of a phase difference at each angle of arrival — S1802

The measurement device determines a candidate angle of arrival of the radio signal based on the correlation — S1803

The measurement device determines an angle of arrival range of the radio signal — S1804

The measurement device determines a candidate angle of arrival within the angle of arrival range as an angle of arrival of the radio signal — S1805

FIG. 18

FIG. 19

FIG. 20(a)

Back side

Front side

Ground truth value of an angle of arrival

Correlation

FIG. 20(b)

A measurement device displays prompt information, where the prompt information is used to prompt a user to change a posture of the measurement device | S2101

The measurement device determines an angle of arrival range of a radio signal | S2102

The measurement device determines measured values of phase differences of the radio signal at a plurality of different moments in a posture change process | S2103

The measurement device determines, within the angle of arrival range of the radio signal, correlations between the measured values of the phase differences of the radio signal at the plurality of different moments and ground truth values of phase differences at different angles of arrival | S2104

The measurement device performs fusion processing on the correlations of the phase differences of the radio signal at the plurality of different moments, to obtain fused correlations | S2105

The measurement device determines an angle of arrival of the radio signal based on the fused correlations | S2106

FIG. 21

Rotation prompt icon

FIG. 22

T1

Ground truth value of an angle of arrival

TO
FIG. 23(d)

FIG. 23(a)

T2

Correlation — Ground truth value of an angle of arrival

TO
FIG. 23(d)

FIG. 23(b)

T3

Ground truth value of an angle of arrival

TO
FIG. 23(d)

FIG. 23(c)

CONT.
FROM
FIG. 23(a)

CONT.
FROM
FIG. 23(b)

CONT.
FROM
FIG. 23(c)

Fusion processing

Correlation

Ground truth value of an angle of arrival

FIG. 23(d)

Azimuth indication information

5 m

FIG. 24

FIG. 25

EP 4 745 612 A1

FIG. 26

## INTERNATIONAL SEARCH REPORT

| | International application No. |
|---|---|
| | **PCT/CN2024/096178** |

**A. CLASSIFICATION OF SUBJECT MATTER**

G01S3/14(2006.01)i

According to International Patent Classification (IPC) or to both national classification and IPC

**B. FIELDS SEARCHED**

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNABS, CNTXT, CNKI: 天线, 辐射场型, 相位差, 到达角, 波达方向, 波达角, 到达方向, 来波方向, 方位角, 方位, 方向, 正面, 背面, 前面, 后面, 距离, 强度, 功率, 差模, 共模, 旋转, 转动; VEN, WOTXT, EPTXT, USTXT: antenna, field pattern, phase difference, PDOA, angle of arrival, AOA, DOA, azimuth, direction, front, back, distance, intensity, power, DM, CM, rotate

**C. DOCUMENTS CONSIDERED TO BE RELEVANT**

| Category* | Citation of document, with indication, where appropriate, of the relevant passages | Relevant to claim No. |
|---|---|---|
| X | CN 114980308 A (GUANGDONG OPPO MOBILE TELECOMMUNICATIONS CORP., LTD.) 30 August 2022 (2022-08-30)<br>description, paragraphs 0029, 0052-0069, and 0090-0092, and figures 1-11 | 1-8, 11-14 |
| Y | CN 114980308 A (GUANGDONG OPPO MOBILE TELECOMMUNICATIONS CORP., LTD.) 30 August 2022 (2022-08-30)<br>description, paragraphs 0029, 0052-0069, and 0090-0092, and figures 1-11 | 9-14 |
| X | WO 2022231113 A1 (SAMSUNG ELECTRONICS CO., LTD.) 03 November 2022 (2022-11-03)<br>description, paragraphs 0062-0083, and figures 1-11 | 1-8, 11-14 |
| Y | WO 2022231113 A1 (SAMSUNG ELECTRONICS CO., LTD.) 03 November 2022 (2022-11-03)<br>description, paragraphs 0062-0083, and figures 1-11 | 9-14 |
| Y | CN 102193080 A (SAMSUNG ELECTRONICS CO., LTD.) 21 September 2011 (2011-09-21)<br>description, paragraphs 0006-0106, and figures 1-8 | 9-14 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 August 2024** | **13 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/096178** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 116125374 A (HUAWEI DEVICE CO., LTD.) 16 May 2023 (2023-05-16)<br>entire document | 1-14 |
| A | CN 116879849 A (SHENZHEN SUNWAY COMMUNICATION CO., LTD.) 13 October 2023 (2023-10-13)<br>entire document | 1-14 |

Form PCT/ISA/210 (second sheet) (July 2022)

## INTERNATIONAL SEARCH REPORT
### Information on patent family members

International application No.

**PCT/CN2024/096178**

| Patent document cited in search report | | | Publication date (day/month/year) | Patent family member(s) | | | Publication date (day/month/year) |
|---|---|---|---|---|---|---|---|
| CN | 114980308 | A | 30 August 2022 | None | | | |
| WO | 2022231113 | A1 | 03 November 2022 | KR | 20220147974 | A | 04 November 2022 |
| | | | | US | 2022353633 | A1 | 03 November 2022 |
| | | | | US | 11671788 | B2 | 06 June 2023 |
| | | | | EP | 4279953 | A1 | 22 November 2023 |
| | | | | CN | 117242369 | A | 15 December 2023 |
| CN | 102193080 | A | 21 September 2011 | JP | 2011169895 | A | 01 September 2011 |
| | | | | EP | 2362236 | A1 | 31 August 2011 |
| | | | | KR | 20110094857 | A | 24 August 2011 |
| | | | | US | 2011199263 | A1 | 18 August 2011 |
| CN | 116125374 | A | 16 May 2023 | WO | 2023083017 | A1 | 19 May 2023 |
| CN | 116879849 | A | 13 October 2023 | None | | | |

Form PCT/ISA/210 (patent family annex) (July 2022)

**EP 4 745 612 A1**

**Patent documents cited in the description**

- CN 202311421264X